(19) Europäisches Patentamt
European Patent Office
Office européen des brevets

(11) EP 2 685 708 A1

(12) EUROPEAN PATENT APPLICATION

(43) Date of publication:
**15.01.2014 Bulletin 2014/03**

(51) Int Cl.:
***H04N 5/232*** *(2006.01)*

(21) Application number: **13174841.0**

(22) Date of filing: **03.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.07.2012 KR 20120074430**

(71) Applicant: **Samsung Electronics Co., Ltd**
**Gyeonggi-do 443-742 (KR)**

(72) Inventors:
- **Lee, Haesun**
**443-742 Gyeonggi-do (KR)**
- **Kim, Myoungwon**
**443-742 Gyeonggi-do (KR)**
- **Lee, Jonghyub**
**443-742 Gyeonggi-do (KR)**
- **Chae, Yongsu**
**443-742 Gyeonggi-do (KR)**

(74) Representative: **Gover, Richard Paul**
**Harrison Goddard Foote LLP**
**Saviour House**
**9 St Saviourgate**
**York YO1 8NQ (GB)**

## (54) Camera device and method for processing image

(57) A method for processing an image in a camera device accordin g to the present disclosure includes auto-focus photographing to c ontinuously obtain an image by moving a focusing lens at a predet ermined focusing interval, extracting a focus value for a focus a rea of the obtained image, and storing the focus value with the i mage. The method also includes focus resetting by displaying a r epresentative image of the stored images, and storing an image ha ving the maximum focus value for a focus area of a selected locat ion if the location is selected from the representative image.

FIG. 8

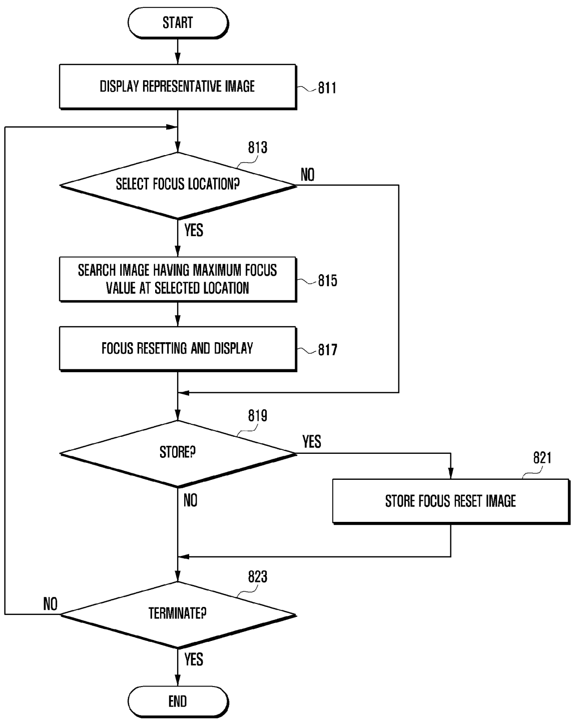


EP 2 685 708 A1

## Description

## TECHNICAL FIELD OF THE INVENTION

The present disclosure relates to a camera device and a method for processing an image in a camera and a portable terminal having a camera and, more particularly, to a camera device and a method for processing an image in autofocus photographing.

## BACKGROUND OF THE INVENTION

Generally, a camera device or a camera or a portable terminal having a camera has an autofocus (auto-focusing) function, and the camera stores only one image having the greatest focus value (hereafter, FV) for a focus area (focus region) predetermined by a developer or manufacturer according to the movement of a focusing lens when taking a still image. However, the autofocus function provided by a conventional camera has a fixed focus or is performed by selecting a specific area with a complicate algorithm. In this case, a subject may be focused at a portion undesired by a user in photographing, and an image focused at a portion undesired by the user cannot be modified to an image focused on a portion desired by the user in a post correcting operation.

## SUMMARY OF THE INVENTION

To address the above-discussed deficiencies of the prior art, it is a primary object to provide a camera device and a method for photographing images individually having a different focus, and storing a correctly focused image selected by a user in a camera or in a portable terminal having a camera.

A camera device according to an embodiment of the present disclosure stores a plurality of images in a memory or in a buffer while a focusing operation is performed in photographing. If the user selects an image or a specific portion of the image in a post view state, the camera device displays or stores an image focused on the selected portion.

A method for processing an image in a camera device according to an embodiment of the present disclosure includes autofocus photographing to continuously obtain an image by moving a focusing lens at a predetermined focusing interval, extracting a focus value of focus area for the obtained image, and storing the focus value with the image. The method also includes focus resetting by displaying a representative image of stored autofocus images, and storing an image having the maximum focus value of a focus area for a selected location if the location is selected from the representative image.

A camera device according to the embodiment of the present disclosure includes a camera unit configured to continuously photograph by moving a focusing lens at a predetermined focusing interval, an image processing unit configured to extract a focus value of a focus area for an image photographed by the camera unit and transmit the focus value with the image, a storage unit configured to store the focus value and the image, a control unit configured to control to store the image and the focus value transmitted from the image processing unit in the storage unit, display a representative image of stored autofocus images when resetting a focus, and store an image having the maximum focus value of the focus area by selecting from the displayed representative image, and a display unit configured to display the image under the control of the control unit.

A method for processing an image in a camera device according to another embodiment of the present disclosure includes autofocus photographing to continuously obtain and store images by moving a focusing lens at a predetermined focus interval. The method also includes focus resetting by extracting a focus value of a focus area for the stored image if the focus resetting is requested, displaying a representative image of stored autofocus images, and selecting and storing an image having the maximum focus value of focus area if the focus area is selected from the representative image.

The present disclosure provides a function that enables a user to modify a photographed image to an image correctly focused at a portion of the image desired by the user.

Before undertaking the DETAILED DESCRIPTION OF THE INVENTION below, it may be advantageous to set forth definitions of certain words and phrases used throughout this patent document:

> the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a block diagram showing a configuration of a camera device according to an embodiment of the present disclosure;

FIG. 2 is a block diagram showing a configuration of a camera unit in a camera device according to an embodiment of the present disclosure;

FIGS. 3A and 3B are block diagrams showing configurations respectively of an image processing unit and a control unit according to an embodiment of the present disclosure;

FIG. 4 is a block diagram showing a configuration of an image processing unit according to another embodiment of the present disclosure;

FIG. 5 is a flow chart showing a procedure of autofocus photographing and editing in a camera device according to an embodiment of the present disclosure;

FIG. 6 is a flow chart showing a procedure of performing an autofocus photographing operation in a camera device according to an embodiment of the present disclosure;

FIG. 7A is a drawing showing an example of focus area and image autofocus photographed according to an embodiment of the present disclosure;

FIG. 7B is a drawing showing an example of focus value extracted from the image of FIG. 7A;

FIG. 8 is a flow chart showing a procedure of focus resetting of an image photographed with an autofocus function in a camera device according to an embodiment of the present disclosure;

FIGS. 9A to 9C are drawings showing examples of focus area having the maximum focus value in autofocus images according to an embodiment of the present disclosure;

FIGS. 10A to 10D are drawings showing examples of displaying a focus area having the maximum focus value by using a scroll bar according to an embodiment of the present disclosure;

FIG. 11 is a flow chart showing a procedure of photographing images individually having a different focal length in a camera device according to another embodiment of the present disclosure; and

FIG. 12 is a flow chart showing a procedure of focus resetting of an image photographed in a camera device according to another embodiment of the present disclosure.

## DETAILED DESCRIPTION OF THE INVENTION

FIGURES 1 through 12, discussed below, and the various embodiments used to describe the principles of the present disclosure in this patent document are by way of illustration only and should not be construed in any way to limit the scope of the disclosure.
Those skilled in the art will understand that the principles of the present disclosure may be implemented in any suitably arranged camera device. Hereinafter, exemplary embodiments of the present disclosure are described in detail with reference to the accompanying drawings. The same reference symbols are used throughout the drawings to refer to the same or like parts. Detailed descriptions of well-known functions and structures incorporated herein may be omitted to avoid obscuring the subject matter of the present disclosure.

The present disclosure relates to a camera device and a method for enabling a user to adjust a focused portion of an image after photographing in a camera device having an autofocus function. The camera device and the method according to the present disclosure provides a function of storing a plurality of images in a memory or buffer while a focusing lens is moving, and displaying or storing an image focused at a portion of an image if the user selects the image or the portion of the image in post view state.

Hereafter, a camera or a portable terminal having a camera is called a camera device.

The camera device according to an embodiment of the present disclosure has a function of controlling a focus, takes a plurality of images corresponding to each focus while a focusing lens is moving, and stores a focus value of each focus area according to the movement of the focusing lens when the images corresponding to each focus are stored. The portable terminal according to the embodiment of the present disclosure displays a representative image while displaying the images, and enables a user to adjust a focus by displaying an image having the maximum focus value of focus area if the user selects the focus area in a state of displaying the representative image.

Focus values of each focus area are measured by using a focus window of an image signal processor (ISP), and stored in a metadata form with an image. The metadata is used for searching the maximum focus value in a selected focus area. In a method of displaying the maximum focus value, a display of an image can change naturally by displaying intermediate images having a focus value between the focusing lens location of the currently displayed image and the focusing lens location of an image having the maximum focus value.

FIG. 1 is a block diagram showing a configuration of a camera device according to an embodiment of the present disclosure.

Referring to FIG. 1, a camera unit 110 has an image sensor, and performs a focusing function by controlling a focusing lens and obtaining an image through the image sensor. The camera unit 110 generates a plurality of images individually having a different focal length by changing the focal length if photographing is requested. Namely, the camera unit 110 generates a plurality of images by changing the focal length in photographing, and thereby the generated images have different focal lengths relative to each other.

An image processing unit 120 displays an image obtained by the camera unit 110 in a display unit 150, and processes and outputs the image storable in a storage unit 140. Here, the image processing unit may be configured in various forms. The image processing unit 120 receives an image (raw image) output by the camera unit 110 and scales the image to a size suitable for displaying in the display unit 160, and performs an image processing operation for displaying and storing the image output by the camera unit 110. Here, the image processing operation extracts 3A (AWB (auto white balance), AE (auto exposure), and AF (auto focusing)) from the image output by the camera unit 110, and performs lens shading correction, dead pixel correction, and knee correction (i.e. pre-processing operation). The image processing operation further performs color interpolation, noise removal, color compensation, and generation of YUV data by converting the color for the above processed image (i.e. post-processing operation).

The image processing unit 120 further obtains photographing information of the image from the camera unit 110. The photographing information includes EXIF (Exchangeable Image File Format) information and additional information obtained in photographing of the camera unit 110. The image processing unit 120 extracts a focus value of the focus area for each image taken by changing the focal length of the camera unit 110, and stores the extracted focus value in the image in a metadata form. The image processing unit 120 continuously obtains a plurality of images individually having a different focal length by moving the focusing lens of the camera unit 110 at a predetermined focusing interval in an autofocus photographing mode. The image processing unit 120 then divides the obtained images into a predetermined number of focus areas, extracts a focus value of each focus area, and stores the extracted focus value in the image having a corresponding focal length in a metadata form.

In the embodiment of the present disclosure, the camera unit 110 obtains a plurality of images in photographing, and may include a compression coder to increase the transmission speed of the images processed by the image processing unit 120. In this case, the image processing unit 120 generates a display image and a compressed image by processing the image taken by the camera unit 110. In the embodiment of the present disclosure, descriptions are made assuming that the image processing unit 120 is configured for generating both the display image and the compressed image. However, the image according to the embodiment of the present disclosure may not be compressed and have a form such as YUV.

A control unit 130 controls general operation of the camera device. According to the embodiment of the present disclosure, the control unit 130 controls the operation of displaying and storing the images output by the image processing unit 120, and controls the operation of editing an image selected by a user when the stored images are displayed. Namely, the control unit 130 controls to take a plurality of images corresponding to a focal length while the focusing lens is moving, and controls to store a focus value of each focus area for the images according to the movement of the focusing lens when storing the images. The control unit 130 further displays a representative image when displaying the stored image, and displays an image having the greatest focus value of focus area if the user selects the focus area in a state of displaying the representative image.

An input unit 160 generates a command for general operation of the camera device. According to the embodiment of the present disclosure, the input unit 160 generates an autofocus photographing command for continuously taking a plurality of images by changing a focal length and a focus resetting command for focus resetting of an autofocus image. The input unit 160 may further generate a focus location selection command for focus resetting of a displayed image in an autofocus resetting mode. The display unit 150 displays an image output by the control unit 130 in a preview mode. When displaying a stored image, the display unit 160 displays a representative image of images taken with different focal lengths under the control of the control unit 130. If the user selects an area through the input unit 160 in a state of displaying the representative image, the display unit 160 displays an image having the greatest focus value in the area output by the control unit 130. Here, the input unit 160 may be a touch panel detecting a user's touch input, and the display unit 150 may be an LCD or OLED panel. Here, the input unit 160 and the display unit 150 may be integrated into a touch screen. The input unit 160 may include buttons disposed at the outside of the camera device.

A storage unit 150 stores a plurality of images taken corresponding to each focus length controlled by the control unit 130 and focus values extracted from focus areas of the images taken according to the movement of the focusing lens.

FIG. 2 is a block diagram showing a configuration of a camera unit in a camera device having the configuration of FIG. 1 according to an embodiment of the present disclosure.

Referring to FIG. 2, if a camera drive command is generated, an operating power is supplied to the camera unit 110. The image processing unit 130 controls a motor 240, and an actuator 250 controls the drive of an optical unit 210 by operating the motor 240. Here, the optical unit 210 performs a focusing operation by the actuator 250. The optical unit 210 has a focusing lens, and changes a focal length at a predetermined focusing interval by operating the actuator 250 in photographing. The optical unit 210 then takes an image, and an image sensor 220 detects the image taken by the optical unit 210 and converts it to an electric signal. Accordingly, the image sensor 220 generates a predetermined number of images according to the focus change by the optical unit 210, and the generated images have different focal lengths. Here, the image sensor 220 may have a resolution higher than full HD. The image detected by the image sensor 220 is converted to a digital signal by an A/D (analog to digital) converter 230, and transferred to the image processing unit 120.

Hereafter, the operations of the camera device having the above configuration are described. The optical unit 210 of the camera unit 110 has a focusing lens, and the focusing lens changes a focal length of an image by moving from up to down or from down to up. Accordingly, the focus value (FV) of the image changes. The actuator 250 has a focus actuator which moves the focusing lens. Generally, various kinds of motors such as a VCM (Voice Coil Motor), stepping motor, and piezo motor may be used for the focus actuator. The image sensor 220 generates an image by receiving lights coming in through the lens.

The image processing unit (ISP; Image Signal Processor) 120 receiving the output of the camera unit 110 performs a role of receiving and processing image data (raw data) output by the image sensor 220 of the camera unit 110 under the control of the camera unit 110. According to the configuration of the image processing unit 120, the image data output by the image processing unit 120 may have various types such as YUV44, YUV422, YUV420, and JPEG. The control unit 130 controls to store the image data output by the image processing unit 120 in the storage unit 140 and to display it in the display unit 150. The control unit 130 further controls the operation of the camera device according to an operation command input through the input unit 160. Here, the control unit 130 may be a CPU, AP (Application Processor), MMP (Multimedia Processor), or microprocessor. The storage unit 140 temporarily or permanently stores the image data output by the image processing unit 120 or by the control unit 130. Namely, the storage unit 140 may be configured with a temporary storage such as a buffer or RAM, and a permanent storage such as a flash memory or ROM.

If a user switches on the camera and presses a photographing button, the control unit 130 controls to take a picture by controlling the camera unit 110 through the image processing unit 120. If photographing is requested, the image processing unit 120 controls the camera unit 110 to take a picture with a predetermined focal length by moving the focusing lens. The focusing lens of the camera unit 110 moves to an initial location by the focus actuator. Here, the initial location of the focusing lens means a location at which the focusing lens starts to focus. Generally, the focusing lens starts from a long distance (Far) towards a short distance (Macro) to focus a subject. However, the focusing lens may start from the short distance and move to the long distance, or may move in various directions according to a developer's algorithm. An interval of the focusing lens' movement may be predetermined or set by a user. According to the predetermined interval of the focusing lens' movement, the number of images having different focal lengths is determined in photographing. Accordingly, if the photographing is requested, the camera unit 110 continuously generates the predetermined number of images by moving the focusing lens at the predetermined interval so that the focusing lens forms different focal lengths.

The image processing unit 120 processes an image output by the camera unit 110, and extracts a focus value (FV) of each focus area for the image after moving the focusing lens. The focus area means one of multiple areas divided in the image for extracting the focus value. Here, the location of the focusing lens having the maximum focus value for the focus areas of the image is determined by the distance between the camera and a subject, and thereby each image continuously photographed has a different focus value for a corresponding area. According to the embodiment of the present disclosure, the image processing unit 120 generates information of photographing (metadata) by extracting a focus value according to a predetermined focus area. The image processing unit 120 extracts the focus value by using an edge extracting method such as high pass filtering.

As described above, the image processing unit 120 changes a focal length by controlling the movement of the focusing lens in photographing, receives continuously photographed images having different focal lengths output by the camera unit 110, and generates metadata by extracting a focus value according to the focal length of the image while processing the received images.

The control unit 130 stores an image output by the image processing unit 120 and metadata of the corresponding image in the storage unit 140. The metadata includes a focus value of each focus area for a photographed image. The focus value may be stored in a separate file or stored as header information of an image. As described above, the method of storing a focus value may use a flash memory or ROM for permanent storing, and a RAM or buffer for temporary storing.

If the number of focusing intervals (interval of focusing lens' movement) in photographing is N, N image frames are generated in the photographing, and the same number of focus values for each image are generated. Accordingly, the camera device according to the embodiment of the present disclosure continuously takes N images in the photographing, and focus values for each image are extracted and stored with the image.

If an image is photographed as described above, a user may select and store a desired focus area for the image. Namely, the user may select and store an image focused at a desired area after photographing. For this, if the user selects a photographed image, the control unit 130 displays a representative image of the photographed images in the display unit 150. Here, the representative image may be set to various forms such as an image of an initial focusing location, image of the last focusing location, and image selected by a general auto focusing algorithm. If the user selects a desired area in the state of displaying the representative image in the display unit 150, the control unit 130 selects an image having the maximum focus value in the area selected by the user. For example, if the user selects a desired area through the input unit 160 in a state of displaying an image in the display unit 150, the control unit 130 receives input coordinates selected in the input unit 160, and searches an image having the maximum focus value at the focus area. The method of searching an image having the maximum focus value is performed by analyzing focus values extracted in photographing and stored by areas in the storage unit 140. If the touch area is not identical to a predetermined focus area, an image having the greatest focus value may be selected from adjacent areas, or selected by adding up the focus values of the adjacent areas. Accordingly, images having various focal lengths are generated in photographing, and the user may select an image focused at a desired area after the photographing.

Generally, a portable terminal having a camera includes an image processing unit 120 and a control unit (application processing unit) 130 as shown in FIG. 1. However, in the camera device or portable terminal, the image processing unit 120 and the control unit 130 may be integrated into one. In this case, the control unit 130 may be configured to be integrated into the image processing unit 120. Hereafter, it is assumed that the camera device is configured with the image processing unit 120 and the control unit 130 individually.

The camera device according to the embodiment of the present disclosure takes a plurality of images having different focal lengths in photographing as described above, extracts focus values for each focus area of the images, and stores the focus values with the images. For this, the image processing unit 120 continuously processes the images having different focal length. A shutter lag may exist from a shutter-on time to an image obtaining time in operating the camera unit 110. The portable terminal having a camera includes an image processing unit 120 configured to process an image of the camera unit 110 and a control unit 130 configured to control general operation of the portable terminal, and thereby a bottleneck can be generated when the image processing unit 120 transmits an image to the control unit 130. Accordingly, it is preferable for the image processing unit 120 to compress the obtained image so that the image processing unit 120 transmits the image to the control unit 130 in a short time for the compensation of the shutter lag.

FIGS. 3A and 3B are block diagrams showing configurations respectively of an image processing unit and a control unit according to an embodiment of the present disclosure.

Referring to FIG. 3A, an image processing unit 320 processes an image output by the camera unit 110 and extracts a focus value for the image. Here, the image output by the camera unit 110 is a raw image and has a resolution higher than full HD, detectable by an image sensor 220. The image processing unit 320 performs image processing functions such as extraction of 3A (AWB (auto white balance), AE (auto exposure), AF (Auto focusing)), color interpolation, and color conversion. In the embodiment of the present disclosure, the image processing unit 320 processes the image output by the camera unit 110 to a YUV image, and at the same time extracts focus values of predetermined focus areas.

A scaler 330 performs a function of adjusting the size of the image output by the image processing unit 320 to a size suitable for displaying in the display unit 150. Here, the scaler 330 may be a resizer. A coder 340 generates a compressed image by encoding an image processed by the image processing unit 320. Here, the compressed image may be a JPEG image.

An image processing control unit 310 controls the camera unit 110 to output a control signal for moving the focusing lens under the control of the control unit 130, and controls general operation of processing an image output by the camera unit 110. The image processing control unit 310 processes focus values for each area of images extracted from the image processing unit 320 to metadata. The metadata (photographing information including a focus value) obtained in the photographing is transferred to a coder 340, and the coder 340 generates a compressed image including the photographing information.

A multiplexing unit 350 outputs photographing information by multiplexing a display image processed by the scaler 330, a compressed image processed by the coder 340, and the focus value.

FIG. 3B is a block diagram showing a configuration of the control unit 130 in the camera device according to the embodiment of the present disclosure. Here, the control unit 130 for a portable terminal may be an application processor (application processing unit).

Referring to 3B, a de-multiplexing unit 370 outputs a display image, compressed image, and metadata by parsing the multiplexed image. A buffer 380 may include a display image buffer 383, compressed image buffer 385, and/or photographing information buffer 387. Here, if the coder 340 generates a compressed image including photographing information, the photographing information buffer 387 may be omitted. The buffer 380 performs buffering of the parsed display image, compressed image, and/or photographing information under the control of an application processing control unit 360. Here, the buffer 380 has a size large enough for buffering N frames of the display image, compressed image, and/or photographing information, and the buffer 380 may have a ring buffer structure. The reason why the buffer 380 is configured in a ring buffer structure is to maintain the number of received image frames and information in a predetermined number of frames. A video coder 390 generates video data by compressing the display image if storing the video data is requested. The video coder 390 may be configured with various video encoders such as H. 264 and MPEG. In the embodiment of the present disclosure, it is assumed that the video coder is a MPEG coder.

Hereafter, the operations of the image processing control unit 310 and the control unit 130 having the above configuration are described. If photographing is requested, the image processing control unit 310 continuously takes images while moving the focusing lens at a predetermined focusing interval by controlling the camera unit 110. The image processing unit 320 then processes images received from the camera unit 110 and extracts focus values for the processed autofocus images. Here, the focus values are for each focus area of the images. Accordingly, the image processing unit 320 processes the images continuously photographed by the camera unit 110 and extracts focus values for each image, where the images have different focal lengths.

The images photographed as described above are scaled to a size of display image by the scaler 330, and the coder 340 compresses the images (full resolution image) including photographing information. The photographing information may include a focus value for the corresponding image according to the embodiment of the present disclosure. The display image and the compressed image are multiplexed by the multiplexing unit 350 and output to the control unit 130.

The de-multiplexing unit 370 of the control unit 130 de-multiplexes the multiplexed display image and compressed image and transfers to the buffer 380. The buffer 380 performs buffering individually for the de-multiplexed display image and compressed image, and the application processing control unit 360 displays the buffered display image by outputting to the display unit 150 and stores the compressed image in the storage unit 140. If the compressed image does not include photographing information, the application processing control unit 360 stores the photographing information in a photographing information buffer 387 of the buffer 380. Here, photographing information corresponding to the compressed image stored in the storage unit 140 is also stored in the photographing information buffer 387. The photographing information includes a focus value of the corresponding image.

The images stored in the storage unit 140 may be registered in an image gallery, and if the user selects a gallery application, thumbnail images of the stored images are displayed in the display unit 150. If the user selects a displayed thumbnail image, the application processing control unit 360 detects it through the input unit 160, and displays the selected image in the display unit 150. If the selected image is an image photographed by an autofocus function, the application processing control unit 360 displays a representative image of the stored images. As described above, the representative image may be set to various forms such as an image of an initial focus location, image of the last focus location, and image of focus location set by the user in photographing.

As described above, if the user selects an area of the displayed image in the state of displaying the representative image, the application processing control unit 360 detects the selected area of the image through the input unit 160. If the input unit 160 is a touch panel, the application processing control unit 360 detects the coordinates of a user's touch location, and identifies a display area of the image selected by the user according to the detected touch coordinates. The application processing control unit 360 then selects an image having the maximum focus value among the focus values of images photographed by an autofocus function and displays it in the display unit 150. If the coordinates selected by the user are not identical to the area of the selected image, the application processing control unit 360 may select an image having the greatest focus value by adding up all the focus values including the area touched by the user.

The user may select an image focused at a desired location after photographing in the above method. Namely, after taking a photo with the autofocus function, the user may select a photo focused at a desired location among the photos having different focal lengths.

FIG. 4 is a block diagram showing a configuration of an image processing unit according to another embodiment of the present disclosure.

Referring to FIG. 4, a pre-processing unit 410 extracts 3A (AWB (auto white balance), AE (auto exposure), AF (Auto focusing)) from an image output by the camera unit 110, and performs pre-processing operations such as lens shading correction, dead pixel correction, and knee correction. An image scaler 420 resizes the pre-processed image to a display image size. The pre-processing unit 410 further extracts focus values of images photographed with different focal length in autofocus photographing according to the embodiment of the present disclosure. A post-processing unit 430 generates YUV data by processing Bayer format data scaled to a display image through color interpolation, noise reduction, color compensation, and color conversion (image conversion).

A buffer 440 performs buffering of a full resolution image output by the pre-processing unit 410. Here, the buffer 440 is configured with a size large enough to store a number of image frames so that the camera device can compensate a shutter lag, and has a ring buffer structure. The buffer 440 performs buffering for every frame of the full resolution image output by the pre-processing unit 410, and an image selected from the buffer by an image processing control unit 400 is accessed in photographing. The post-processing unit 430 generates YUV data by processing the full resolution image selected from the buffer 440 through color interpolation, noise reduction, color compensation, and color conversion. A still image codec 460 compresses and encodes the full resolution image output by the post-processing unit 450.

A multiplexing unit 470 outputs by multiplexing the output of the post-processing unit 430 and the output of the still image codec 460 under the control of the image processing control unit 400.

Hereafter, the operations of the image processing unit 120 having the above configuration are described. In autofocus photographing, the image processing control unit 400 controls the camera unit 110 so that the focusing lens moves at a predetermined focusing interval, and the camera unit 110 continuously outputs images photographed with different focal lengths to the pre-processing unit 410 under the control of the image processing control unit 400. The pre-processing unit 410 processes an image output by the camera unit 110 and extracts a focus value of the processed image. The processed image and the focus value are buffered in the buffer 440. The image buffered in the buffer 440 is post-processed by the post-processing unit 450, and photographing information including the post-processed image and the focus value is compressed and encoded by the still image codec 460. The multiplexing unit 470 multiplexes the display image and the compressed and encoded image, and transmits them to the control unit 130.

Here, the pre-processing unit 410 may be disposed at the rear end of the scaler 420 and buffer 400. The post-processing units 430 and 450 may be configured as one unit and disposed at the rear end of the pre-processing unit 410.

The image processing unit 120 having the configuration shown in FIG. 4 processes the display image and the compressed image separately, and thereby may not transmit the compressed image to the control unit 130 in a preview mode. Namely, the image processing unit 120 transmits the compressed image to the control unit 130 only when photographing is requested by the user.

Hereafter, a procedure of photographing with an autofocus function in a camera device having the above configuration according to an embodiment of the present disclosure is described in more detail.

FIG. 5 is a flow chart showing a procedure of autofocus photographing and editing in a camera device according to an embodiment of the present disclosure.

Referring to FIG. 5, a user may register an autofocus function in photographing. Here, the autofocus function means a function of continuously photographing while changing a focal length according to the embodiment of the present disclosure. When setting the autofocus function, a focusing interval may be set. If the number of the focusing interval is set to N, the number of images photographed becomes N frames having different focal lengths. If the user enters a setting mode (operation 511) and sets an autofocus function (operation 513), the control unit 130 detects it and sets the focusing interval (operation 515). The user may set the focusing interval or use a default value. However, if the autofocus function is not set at operation 513, the control unit 130 sets a corresponding function (operation 517).

If photographing is requested in the state that the autofocus function is not set (operation 521) and if the autofocus photographing is requested (operation 523), the control unit 130 executes autofocus photographing (operation 525). However, if the autofocus photographing is not requested at operation 523, the control unit 130 performs photographing in a general photographing mode (operation 527). In the autofocus photographing mode, the camera device continuously takes images having different focal lengths by moving the focusing lens at a predetermined interval, and the photographed image and the focus value are stored together.

After photographing with the autofocus function as described above, a photo focused at a desired location can be selected among the taken photos. If the user selects a photo taken with the autofocus function (operation 531), the control unit 130 displays a representative image in the display unit 150. If a specific area is selected in the representative image, the control unit 130 identifies it as focus resetting and displays a photo having the maximum focus value in the touch area, and displays the photo in the display unit 150 (operation 533). However, if the focus resetting is not selected in operation 533, the control unit 130 displays a corresponding photo and waits for a user's input.

Hereafter, operation 525 of taking and processing a photo and operation 535 of focus resetting after taking the photo are described in more detail.

FIG. 6 is a flow chart showing a procedure of performing an autofocus photographing operation in a camera device according to an embodiment of the present disclosure. FIG. 7A is a drawing showing an example of focus area and image autofocus photographed according to an embodiment of the present disclosure, and FIG. 7B is a drawing showing an example of focus value extracted from the image of FIG. 7A.

Referring to FIG. 6, if the user switches on the camera and presses a photographing button, the control unit 130 detects it and informs the image processing unit 120 that photographing is requested. The image processing unit 120 controls the focus actuator of the camera unit 110 to move the focusing lens to an initial location (operation 611). Here, the initial location means the first location at which the focusing lens starts photographing. Generally, a focusing lens starts focusing from a long distance (Far) toward a short distance (Macro) until a subject is correctly focused. However, the focusing lens may start focusing from a short distance and move towards a long distance, or an initial location of the focusing may be set by the user. A focusing interval (interval of focusing lens' movement) may be set to a default value or set by the user in a setting mode.

If the focusing lens moves to the initial location, an image sensor of the camera unit 110 generates an image focused by the focusing lens and outputs the image to the image processing unit 120. The image processing unit processes the image output by the camera unit 110 (operation 613), and extracts a focus value of the processed image (operation 615). Here, the focus value may be extracted for each focus area of the photographed image. The image processing unit 120 then transmits the image and the extracted focus value to the control unit 130, and the control unit 130 stores the image and the extracted focus value (FV) in the storage unit 140 (operation 617). The focus value (FV) may be stored in a header information form in the image when storing the image. As described in the configuration of the camera device according to the present disclosure, a flash memory or ROM may be used for permanent storing, and a buffer or RAM may be used for temporary storing.

Subsequently, the image processing unit 120 identifies whether the location of the currently photographed image is the last one (operation 619). Namely, the image processing unit 120 identifies whether the focusing lens reached the end of the movable location, and terminates photographing if the focusing lens reached the last location. If the focusing lens hasn't reached the last location, the image processing unit 120 moves the focusing lens to the next focus location by controlling the focus actuator of the camera unit 110 (operation 621), and returns to operation 613. The image processing unit 120 repeats operations 613 to 621 until the last focus location is reached. While performing the above procedure, the image processing unit 120 stores images taken by moving the focusing lens at the predetermined interval and focus values for each focus area of the images.

The focus area means one of multiple areas divided in an image to obtain a plurality of focus values in the image as 700 shown in FIG. 7A. When taking an image as shown in FIG. 7A, focus values of focus areas "A" to "D" are extracted differently according to the focusing interval. When autofocus photographing by moving the focusing lens at the focusing interval, the maximum focus value is extracted from the focus area "D" if Subject 717 is focused, a high focus value is extracted from upper and lower focus areas and adjacent focus areas including the focus area "C" if Subject 715 is focused, the maximum focus value is extracted from the focus area "B" if Subject 713 is focused, and the maximum focus value is extracted from the focus area "A" if Subject 711 is focused. Accordingly, the location of the focusing lens having the maximum focus value in the focus areas of the image becomes different according to the distance between the camera and the subject. The image processing unit 120 extracts the focus value according to the predetermined focus area. The extraction of focus value may be extracted by an edge extraction method such as high pass filtering.

When taking an image of FIG. 7A, the focusing lens moves from an initial location "x" to the next focus location "x+f(1)", and photographing proceeds until the focusing lens reaches the last location "x+f(N)" as shown in FIG. 7B. Here, x indicates an initial location of the focusing lens, and f(1)-f(N) indicates a predetermined next location of the focusing lens. Hereafter, it is assumed that focusing is performed from a long distance toward a short distance, and Subject 711 is located furthest from the user and Subject 717 is located nearest to the user. In this case, Subjects 711 to 717 have the maximum focus value according to the location of the focusing lens as shown in FIG. 7B, and the location of the focusing lens having the maximum value for each focus area changes. In FIG. 7B, FV_max indicates the maximum focus value. Accordingly, focus values shown in FIG. 7B are extracted when the image of FIG. 7A is photographed with the autofocus function. Generally, the maximum of focus value (FV) for each focus area can be calculated by using Equation 1,

$$1/a+1/b=1/f \quad \text{[Eqn. 1]}$$

where a is the distance between lens and subject, b is the distance between lens and image sensor, and f is the focal length.

Accordingly, when Subject 717 in the focus area "D" is located closer, the image sensor and the focusing lens of the camera unit 110 are located furthest from the initial location shown as "D_FVmax". When Subject 711 in the focus area "A" is located further, the image sensor and the focusing lens of the camera unit 110 are located closest from the initial location shown as "A_FVmax", as shown in FIGS. 7A and 7B. Namely, the image has the maximum focus value at a different focusing lens location according to the distance between the camera unit 110 and the subject.

Hereafter, a procedure of selecting and editing an image with a desired focus location is described in the state that a photographed image and a focus value are stored. FIG. 8 is a flow chart showing a procedure of focus resetting of an image autofocus photographed in a camera device according to an embodiment of the present disclosure. FIGS. 9A to 9C are drawings showing examples of a focus area having the maximum focus value in autofocus images according to an embodiment of the present disclosure. FIGS. 10A to 10D are drawings showing examples of displaying a focus area having the maximum focus value by using a scroll bar according to an embodiment of the present disclosure.

Referring to FIGS. 8 to 10D, the focus resetting according to the embodiment of the present disclosure starts with displaying an image photographed with an autofocus function. If a user selects a photo list (for example, gallery) through the input unit 160 and selects a specific image from thumbnail images displayed in the display unit 150, the control unit 130 identifies whether the selected image is an image photographed with the autofocus function. If the selected image is an image photographed with the autofocus function, the control unit 130 displays a representative image in the display unit 150 (operation 811). Here, a representative image is one of images photographed with the autofocus function, and may be an image of an initial focus location, image of the last focus location, or image selected by an autofocus algorithm.

If the user selects a specific area of an image displayed in the display unit 150 while displaying the representative image, the control unit 130 detects a focus area selected through the input unit 160 and identifies it as an input for resetting an image of the detected focus area (operation 813). If the input unit 160 is a touch panel, the control unit 130 detects the coordinates of the touch location through the input unit 160, determines a focus area corresponding to the touch coordinates, and searches an image having the maximum focus value for the selected focus area among the images stored in the storage unit 140 (operation 815). The control unit 130 controls to display the image having the maximum focus value in the focus area selected by the user.

The control unit 130 identifies whether storing the image is requested by the user (operation 819), and stores the displayed image in the storage unit 140 if storing the image is requested (operation 821). Here, the image may be stored as a representative image of autofocus images. The above procedure is repeated until the user requests for termination of the focus resetting. If termination of the focus resetting is requested, the control unit 130 terminates the focus resetting procedure for the autofocus images (operation 823).

The camera device according to the embodiment of the present disclosure takes and stores a plurality of images at a predetermined focusing interval by performing the procedure of FIG. 6, and the stored images are focused at different locations according to the focusing interval. The images are stored with focus values extracted from each focus area. Accordingly, the stored images are photos focused at various locations. If the user selects a photo image in a state that autofocus images are stored, the camera device performs the procedure of FIG. 8. Namely, the camera device displays a representative image of the autofocus images, and the control unit 130 selects and stores a photo image focused at a location desired by the user (i.e., a photo image having the maximum focus value in the focus area selected by the user) if the user select a desired location in the representative image.

Referring to FIGS. 9A to 9C, FIG. 9A is focused at the area "B", FIG. 9B is focused at the area "A", and FIG. 9C is focused at the area "C". Here, it is assumed that the representative image is as shown in FIG. 9A. If a displayed autofocus image is selected, the control unit 130 displays the image of FIG. 9A in the display unit 150. If the user touches the area "A" in the state of displaying the image of FIG. 9A, the control unit 130 searches an image having the maximum focus value in the area "A" among the images stored in the storage unit 140, and displays the image having the maximum focus value in the area "A" in the display unit 150 according to the result of the search as shown in FIG. 9B. If storing the images is requested by the user, the control unit 130 stores the image of FIG. 9B having the maximum focus value in the area "A" as a representative image. If the user touches the area "C" in the state of displaying the image of FIG. 9A, the control unit 130 searches an image having the maximum focus value in the area "C" among the images stored in the storage unit 140, and displays the image having the maximum focus value in the area "C" in the display unit 150 according to the result of the search as shown in FIG. 9C. If storing the images is requested by the user, the control unit 130 stores the image of FIG. 9C having the maximum focus value in the area "C" as a representative image.

A method for searching an image having the maximum focus value may be performed by analyzing focus values extracted through the procedure of FIG. 6. If the area selected by the user is not identical to a predetermined focus area shown in FIG. 7A, the control unit 130 may analyze all the adjacent areas including the area selected by the user, and may select an image having the greatest focus value among them. If the image having the maximum focus value is found, the control unit 130 may not show the searched image directly but show intermediate images between the current image and the found image to change the display image smoothly.

After photographing a plurality of images with different focal lengths and storing the photographed images with focus values according to the procedure of FIG. 6, the focus resetting may be performed by using a scroll bar as shown in FIGS. 10A through 10D. If the scroll bar is located at the leftmost as shown in FIG. 10A, the camera device shows an image having the closest distance between the focusing lens and the subject, and if the scroll bar moves to the right as shown in FIGS. 10B to 10D, the camera device shows an image having further distance between the focusing lens and the subject in the direction of the focusing lens's movement. Here, if the user stops moving the scroll bar and selects a corresponding image, the camera device selects an image having the maximum focus value at the corresponding location. Accordingly, the user may select an image having the maximum focus value at a desired location by using the scroll bar in the focus resetting as shown in FIGS. 10A to 10D.

According to another embodiment of the present disclosure, after photographing at a predetermined focusing interval and storing images, the focus resetting can be performed by extracting focus values from the images photographed with different focal lengths. Namely, as shown in FIG. 6, image values of images continuously photographed according to a focusing interval set by the image processing unit (ISP: Image Signal Processor) 120 may be extracted and the images may be stored with the extracted focus values according to the location of the focusing lens. The same effect as the previous embodiment of the present disclosure can be obtained by photographing and storing the images at the predetermined focusing interval, and by resetting focus values for each focus area of the stored images through the processing of the control unit 130.

FIG. 11 is a flow chart showing a procedure of photographing images individually having a different focal length in a camera device according to another embodiment of the present disclosure.

Referring to FIG. 11, if a user actuates a photographing button, the control unit 130 detects it and informs the image processing unit 120 to start photographing. The image processing unit 120 moves the focusing lens to an initial location by controlling the focus actuator of the camera unit 110 (operation 1111). Here, the initial location means the first location at which the focusing lens starts photographing. If the focusing lens moves to the initial location, the image sensor of the camera unit 110 generates an image focused by the focusing lens and outputs it to the image processing unit 120. The image processing unit processes the image output by the camera unit 110 and transmits the processed image to the control unit 130 (operation 1113), and the control unit 130 stores the transmitted image in the storage unit 140 (operation 1115).

Subsequently, the image processing unit 120 checks whether the currently photographed image is at the last focus location (operation 1117). Namely, the image processing unit 120 identifies whether the focusing lens is at the last movable location, and terminates the photographing if the focusing lens is at the last location. If the focusing lens is not at the last location, the image processing unit 120 moves the focusing lens to the next location by controlling the focus actuator of the camera unit 110 (operation 1119), and returns to operation 1113. The image processing unit 120 then repeats the operations 1113 to 1119 until the last focus location is reached. While performing the above procedure, the image processing unit 120 stores images photographed by moving the focusing lens at the predetermined focusing interval.

After storing a plurality of images photographed at the predetermined focusing interval through the procedure of FIG. 11, the user may select an image focused at a desired location.

FIG. 12 is a flow chart showing a procedure of focus resetting of an image photographed in a camera device according to another embodiment of the present disclosure.

Referring to FIG. 12, the focus resetting starts with displaying an image photographed with an autofocus function. If a user selects an autofocus image through the input unit 160, the control unit 130 extracts focus values for each area from the stored autofocus images (operation 1211). A method of extracting a focus value for each area of the image by the image processing unit 120 may be the same as the aforementioned method of extracting an image. The control unit 130 stores the focus values for each area of the image in the storage unit 140. Namely, the control unit 130 sequentially selects an image by performing operations 1211 to 1213 if an autofocus image is selected, and stores focus values for each area corresponding to the image after extracting the focus value. The above procedure is performed repeatedly until the last photographed image is reached.

Subsequently, the control unit 130 displays a representative image of the autofocus images in the display unit 150 (operation 1215). Here, the representative image is one of multiple images photographed with an autofocus function, and may be an image of an initial focus location, image of the last focus location, or default image set by the system. If a user selects a specific area of an image displayed in the display unit 150 in the state of displaying the representative image, the control unit 130 detects the focus area of the selected location through the input unit 160 (operation 1217). Here, the focus location may be set through the input unit 160. If the input unit 160 is a touch panel, the control unit 130 detects the focus area from the coordinates of the touched location. Further, if a scroll bar is displayed in the display unit 150, the control unit 130 can detect the focus location by detecting the movement of the scroll bar as shown in FIGS. 10A to 10D. If a focus location is selected, the control unit 130 detects it (operation 1217), and searches an image having the maximum focus value of the selected area among the images stored in the storage unit 140 after deciding a focus area corresponding to the selected location (operation 1219). Subsequently, the control unit 130 selects and displays the image having the maximum focus value in the focus area selected by the user (operation 1221).

If storing the image is requested by the user, the control unit 130 detects it (operation 1223), and stores the displayed image in the storage unit 140 (operation 1225). Here, the image being stored in the storage unit 140 may be stored as a representative image of the autofocus images. The above procedure may be repeated until termination of focus resetting is requested by the user. If termination of focus resetting is requested by the user, the control unit 130 detects it and terminates the procedure of focus resetting for the images (operation 1227).

As shown in FIGS. 11 and 12, if autofocus photographing is requested, the image processing unit 120 stores each photographed image in the storage unit 140 by moving the focusing lens from the initial location to the last location.

If the focus resetting is started afterwards, the control unit 130 extracts focus values for each focus area of the stored images, and stores the extracted focus values corresponding to the images by performing operations 1211 to 1213 of FIG. 12. Here, the control unit 130 may extract the focus values by using various image post processing methods such as edge extracting and HPF (High Pass Filtering). The control unit 130 may store the result of analyzing the extracted focus values for each image at the location of the focusing lens having the maximum focus value (FVmax) for each area in a look up table or in a temporary text file.

Subsequently, the control unit 130 displays the representative image in the display unit 150 at operation 1215 of FIG. 12, and waits for a user's input for focus resetting. If the user selects a specific area of the image for focus resetting as shown in FIGS. 9A to 9C, the control unit 130 searches an image corresponding to the location of the focusing lens having the maximum focus value in the area selected by the user, and displays the image in the display unit 150 by performing operations 1217 to 1221. Here, the control unit 130 may not display the found image directly, but may display intermediate images between the current lens location and the lens location having the maximum focus value to change the display image smoothly. Further, the resetting of the focus location may be performed by using a scroll bar as shown in FIGS. 10A to 10D. After the resetting of the focus location, the control unit 130 stores or cancels the reset image according to the user's decision through operations 1223 to 1227, and terminates the procedure of focus resetting.

Although the present disclosure has been described with an embodiment, various changes and modifications may be suggested to one skilled in the art. It is intended that the present disclosure encompass such changes and modifications as fall within the scope of the appended claims.

## Claims

**1.** A method for processing an image in a camera device, comp rising:

autofocus photographing to continuously obtain an image by moving a focusing lens at a predetermined focusing interval, extracting a focus value of a focus area for the obtained image, and storing the focus value with the image; and
focus resetting by displaying a representative image of stored autofocus images, and storing an image having the maximum focus value of a focus area for a selected location if the location is selected from the representative image.

**2.** The method of claim 1, wherein the autofocus photographing comprises:

obtaining an image at a predetermined focus location;
extracting a focus value of the focus area for the obtained image;
storing the extracted focus value with the image;
terminating a photographing operation if the last focus location is identified by checking the focus location, otherwise repeating the above procedure after changing the focus location to the next.

**3.** The method of claim 2, wherein changing the focus location comprises moving the focusing lens at a predetermined interval with a focus actuator.

**4.** The method of claim 2, wherein extracting a focus value comprises dividing the images into a plurality of focus areas and extracting focus values for the divided areas.

**5.** The method of claim 4, wherein extracting a focus value comprises edge extraction or high pass filtering of the image.

**6.** The method of claim 2, wherein the focus value is stored in the image in a metadata form.

**7.** The method of claim 2, wherein the focus resetting comprises:

displaying a representative image if an autofocus image is selected;
selecting an image having the maximum focus value of the focus area if the focus area is selected from the displayed representative image; and
storing the selected image as a focus readjusted image.

**8.** The method of claim 7, wherein selecting an image comprises identifying a focus area with a touch location if a touch is detected from the displayed image and selecting an image having the maximum focus value according to an analysis of focus values for the identified focus area.

**9.** A camera device, comprising:

a camera unit configured to continuously photograph by moving a focusing lens at a predetermined focusing interval;
an image processing unit configured to extract a focus value of a focus area for an image photographed by the camera unit and transmit the focus value with the image;
a storage unit configured to store the focus value and the image;
a control unit configured to control to store the image and the focus value transmitted by the image processing unit in the storage unit, display a representative image of stored autofocus images when resetting a focus, and store an image having the maximum focus value of the focus area by selecting from the displayed representative image; and
a display unit configured to display the image under the control of the control unit.

**10.** The device of claim 9, wherein the image processing unit controls such that the focusing lens of the camera unit moves at a predetermined interval, extracts a focus value of the focus area for an image continuously being photographed at the moving focus location, and transmits the focus value with the image.

**11.** The device of claim 10, wherein the camera unit obtains an image by moving the focusing lens at the predetermined interval with a focus actuator under the control of the image processing unit.

**12.** The device of claim 10, wherein the image processing unit extracts the focus value by edge extraction or high pass filtering of the image.

**13.** The device of claim 10, wherein the image processing unit transmits the focus value to the control unit for storing the image in a metadata form.

**14.** The device of claim 10, wherein the control unit controls to display the representative image if an autofocus image is selected, selects an image having the maximum focus value of the focus area if the focus area is selected from the displayed representative image, and stores the selected image as a focus readjusted image.

**15.** The device of claim 14, wherein the control unit identifies a focus area with a touch location if a touch is detected from the displayed image and selects an image having the maximum focus value by analyzing the focus value for the identified focus area.

FIG. 1

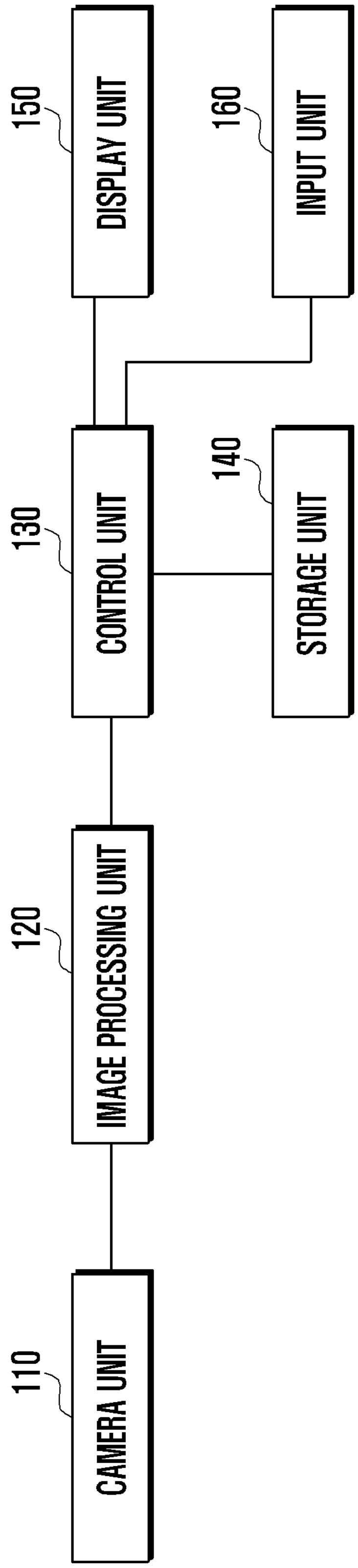
110
CAMERA UNIT
120
IMAGE PROCESSING UNIT
130
CONTROL UNIT
140
STORAGE UNIT
150
DISPLAY UNIT
160
INPUT UNIT

FIG. 2

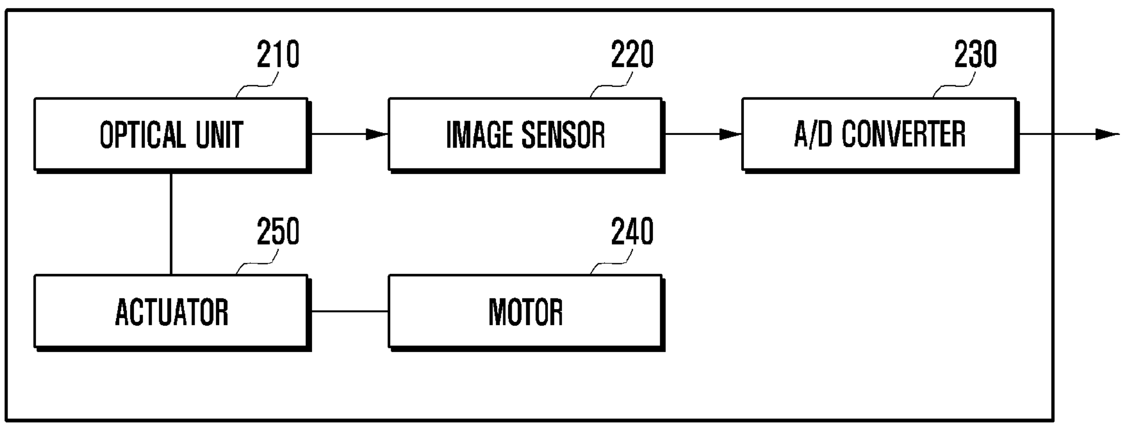
210
OPTICAL UNIT
220
IMAGE SENSOR
230
A/D CONVERTER
250
ACTUATOR
240
MOTOR

FIG. 3A

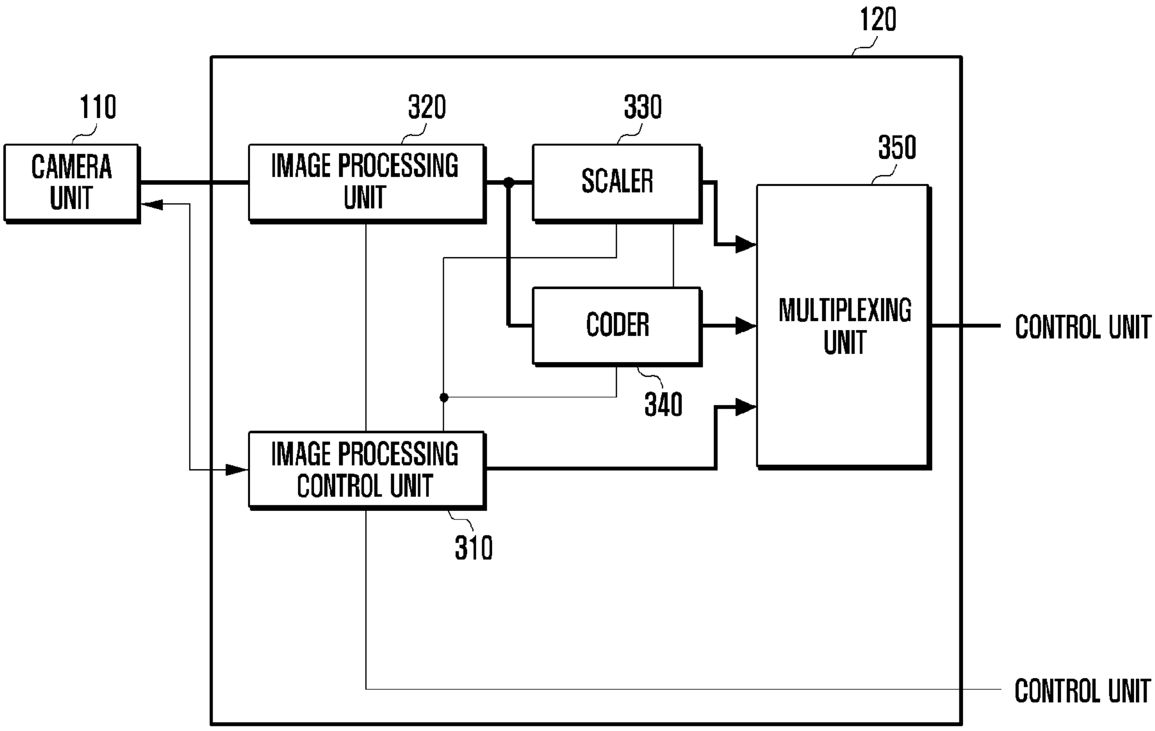
120
110
CAMERA UNIT
320
IMAGE PROCESSING UNIT
330
SCALER
350
MULTIPLEXING UNIT
CODER
340
CONTROL UNIT
IMAGE PROCESSING CONTROL UNIT
310
CONTROL UNIT

FIG. 3B

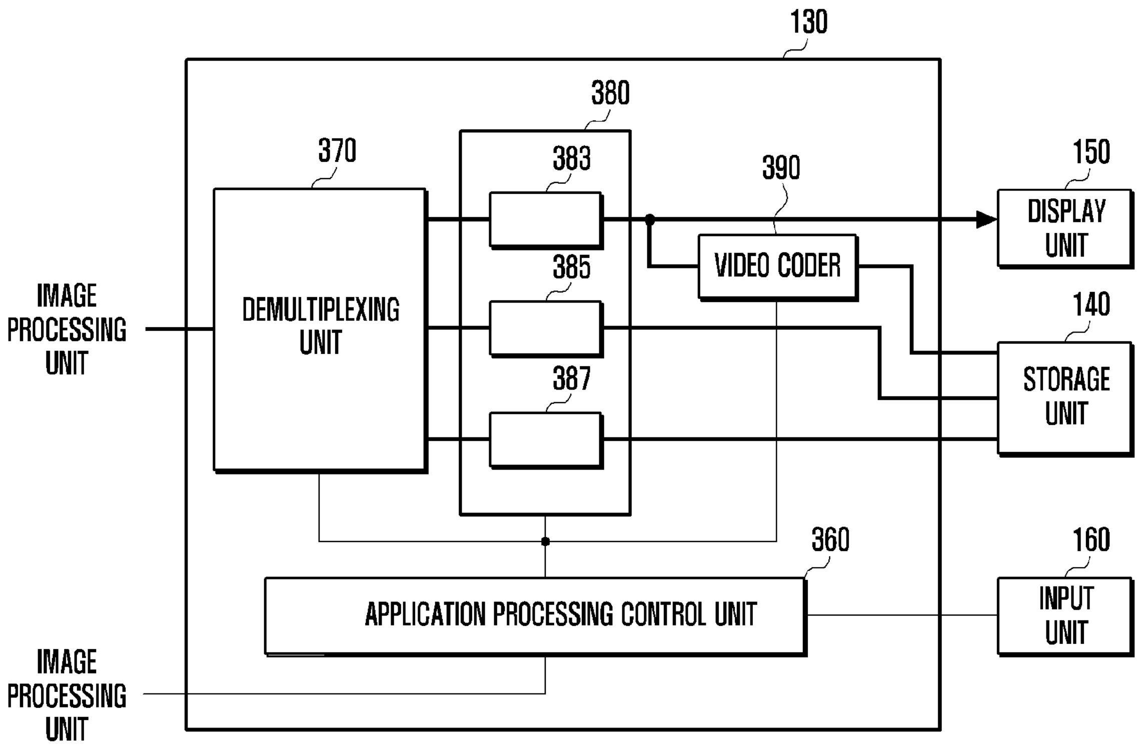
130
380
370
383
390
150
DISPLAY UNIT
VIDEO CODER
385
140
IMAGE PROCESSING UNIT
DEMULTIPLEXING UNIT
STORAGE UNIT
387
360
160
APPLICATION PROCESSING CONTROL UNIT
INPUT UNIT
IMAGE PROCESSING UNIT

FIG. 4

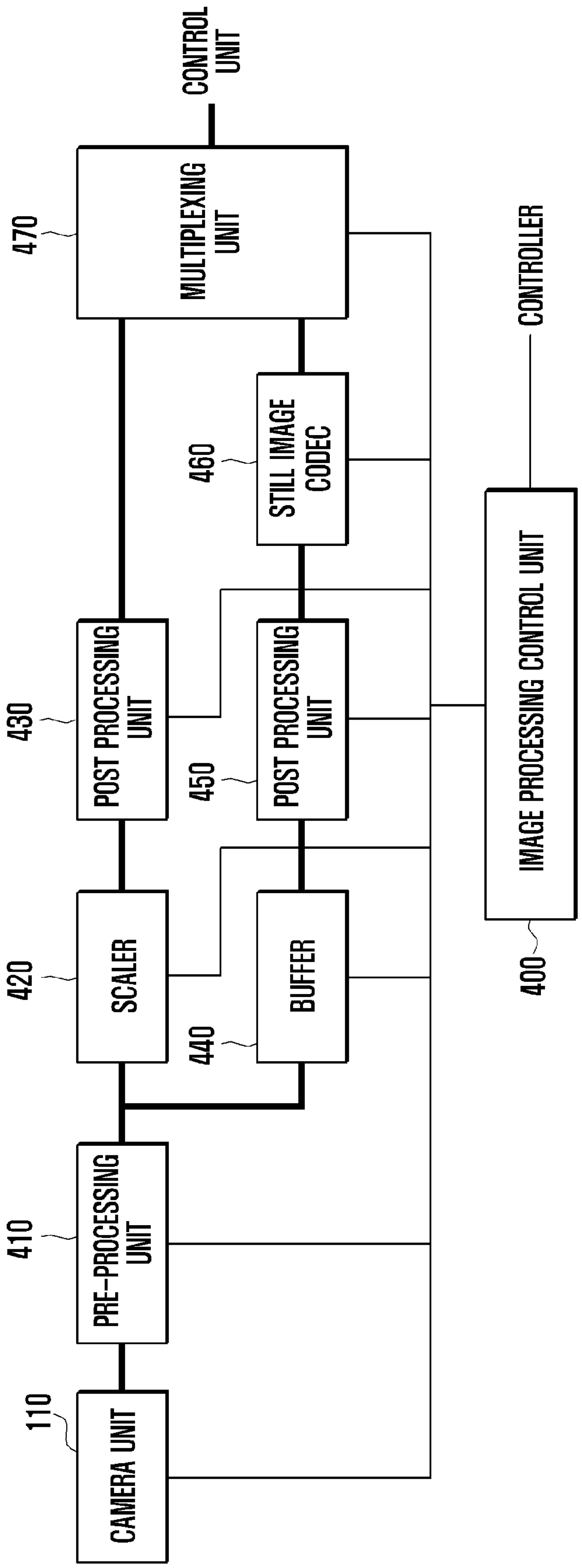
CONTROL UNIT
470
MULTIPLEXING UNIT
460
STILL IMAGE CODEC
430
POST PROCESSING UNIT
450
POST PROCESSING UNIT
420
SCALER
440
BUFFER
410
PRE-PROCESSING UNIT
110
CAMERA UNIT
CONTROLLER
IMAGE PROCESSING CONTROL UNIT
400

FIG. 5

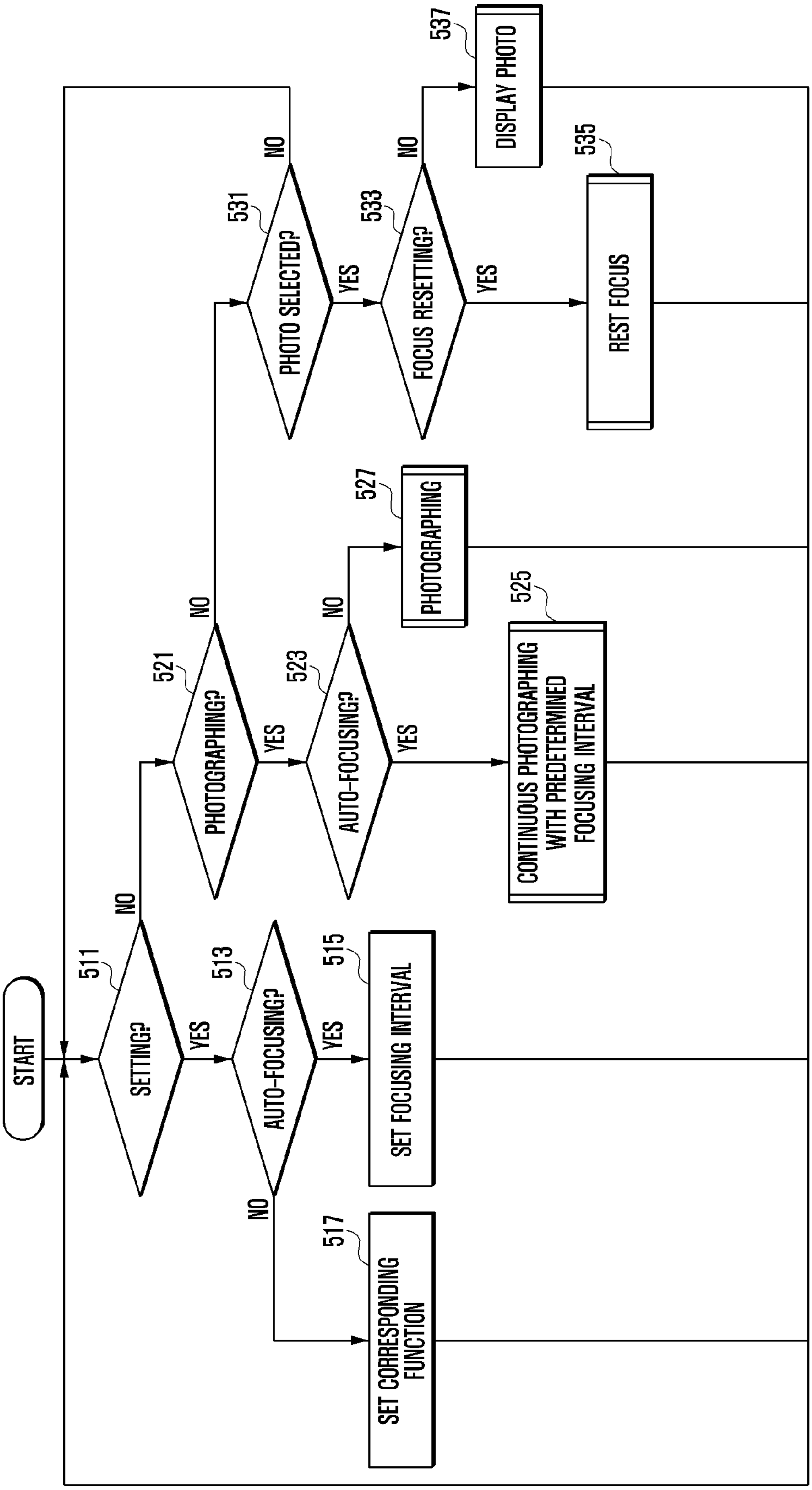
START
SETTING?
511
YES
NO
AUTO-FOCUSING?
513
YES
NO
SET FOCUSING INTERVAL
515
SET CORRESPONDING FUNCTION
517
PHOTOGRAPHING?
521
YES
NO
AUTO-FOCUSING?
523
YES
NO
CONTINUOUS PHOTOGRAPHING WITH PREDETERMINED FOCUSING INTERVAL
525
PHOTOGRAPHING
527
PHOTO SELECTED?
531
YES
NO
FOCUS RESETTING?
533
YES
NO
REST FOCUS
535
DISPLAY PHOTO
537

FIG. 6

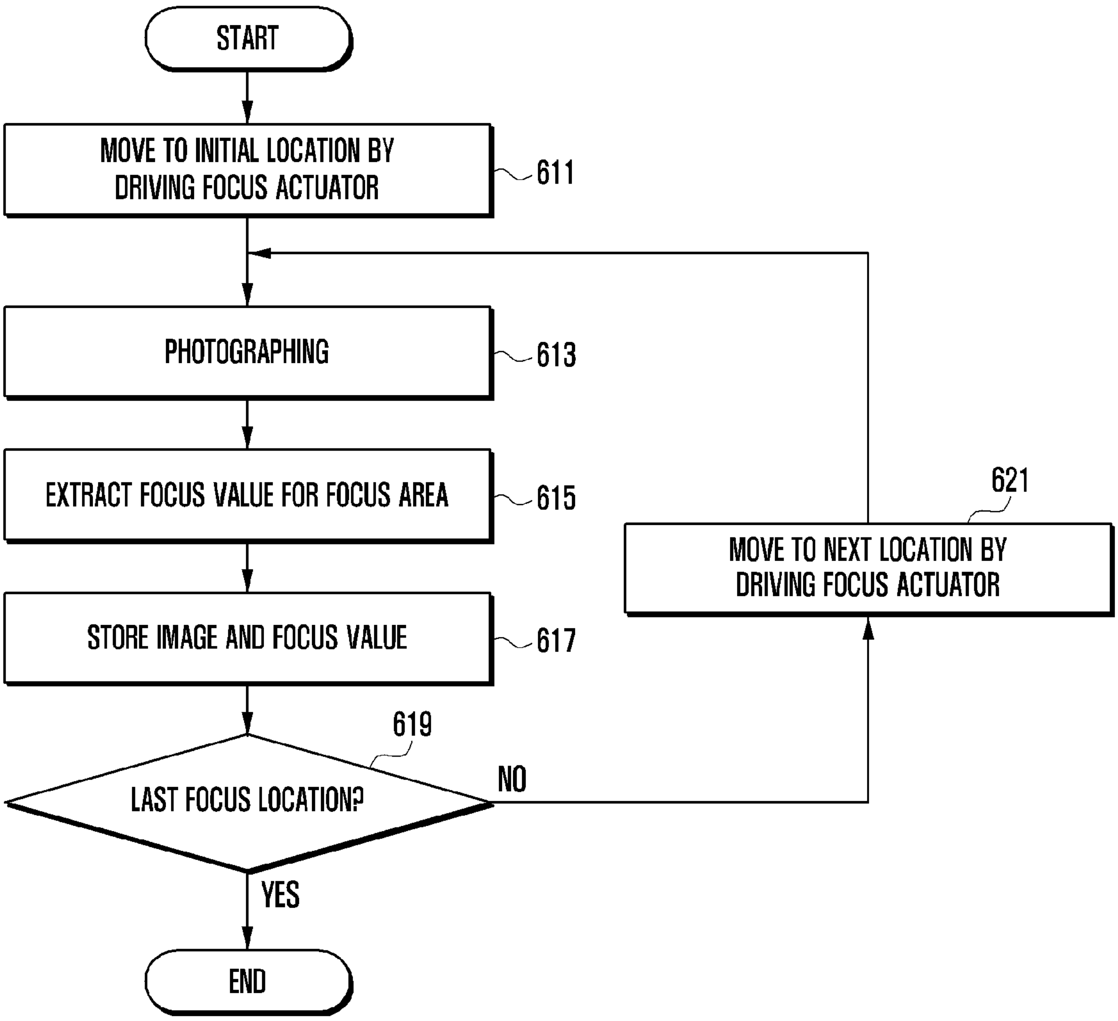
START
MOVE TO INITIAL LOCATION BY DRIVING FOCUS ACTUATOR
611
PHOTOGRAPHING
613
EXTRACT FOCUS VALUE FOR FOCUS AREA
615
STORE IMAGE AND FOCUS VALUE
617
619
LAST FOCUS LOCATION?
NO
YES
END
621
MOVE TO NEXT LOCATION BY DRIVING FOCUS ACTUATOR

FIG. 7A

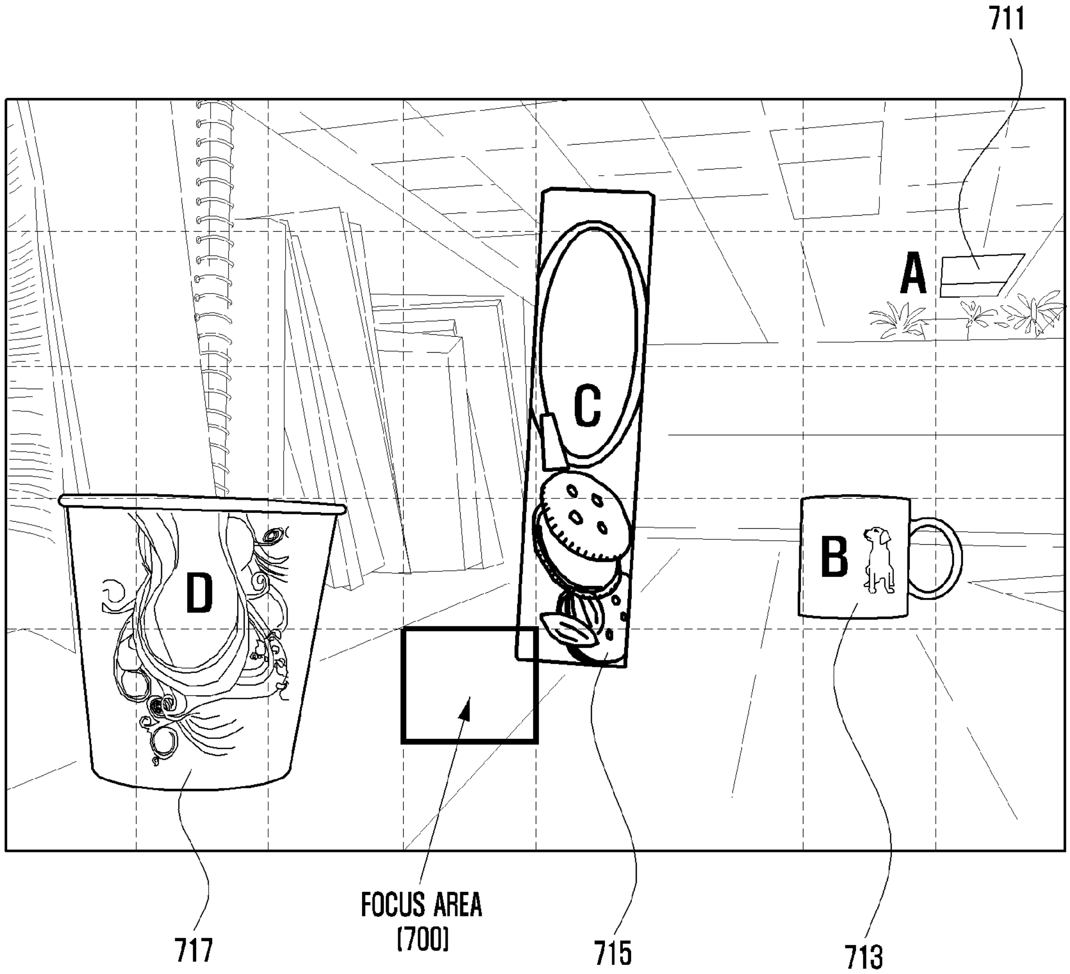

FIG. 7B

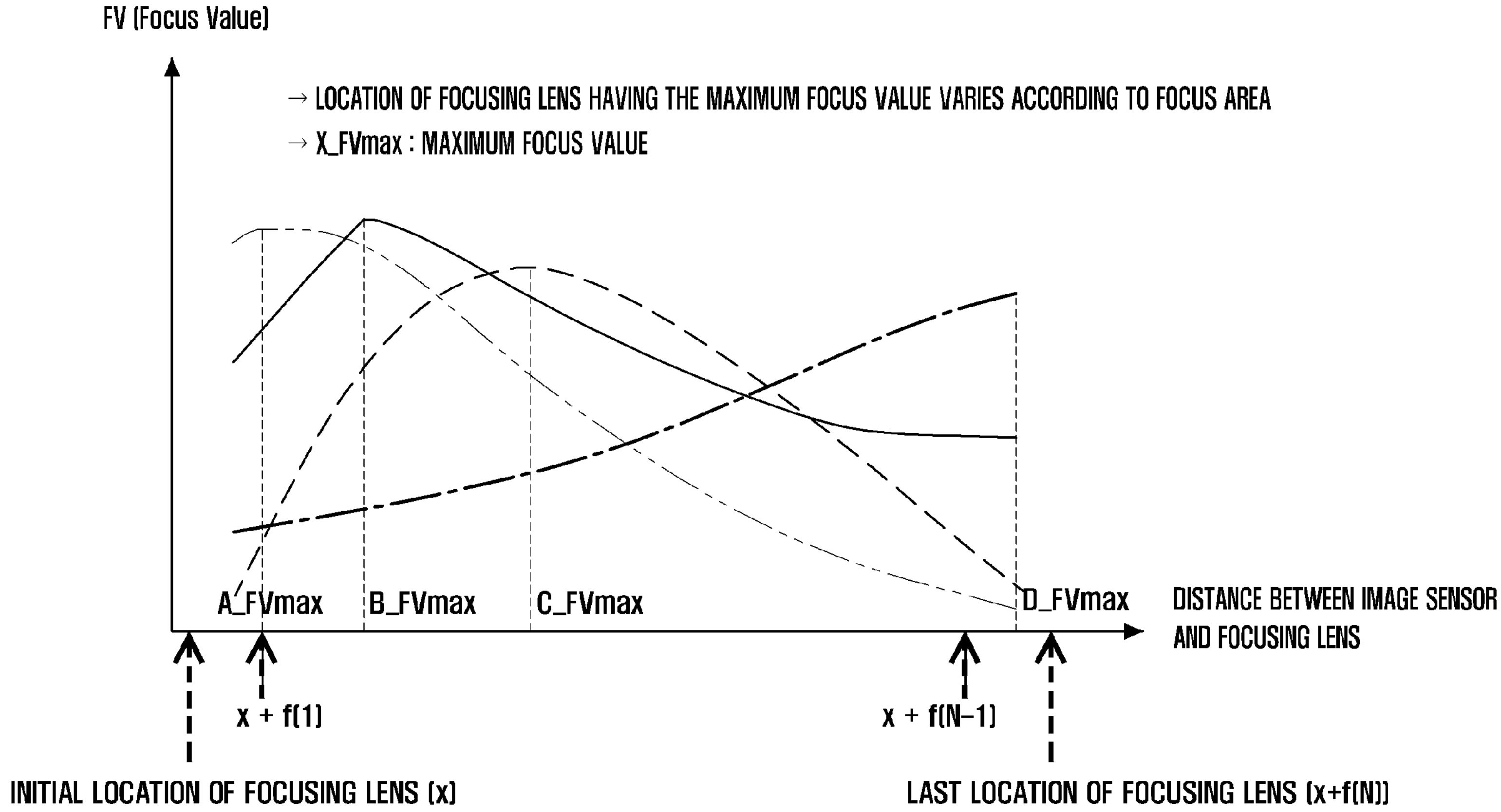
FV (Focus Value)
→ LOCATION OF FOCUSING LENS HAVING THE MAXIMUM FOCUS VALUE VARIES ACCORDING TO FOCUS AREA
→ X_FVmax : MAXIMUM FOCUS VALUE
A_FVmax
B_FVmax
C_FVmax
D_FVmax
DISTANCE BETWEEN IMAGE SENSOR AND FOCUSING LENS
x + f(1)
x + f(N-1)
INITIAL LOCATION OF FOCUSING LENS (x)
LAST LOCATION OF FOCUSING LENS (x+f(N))

FIG. 8

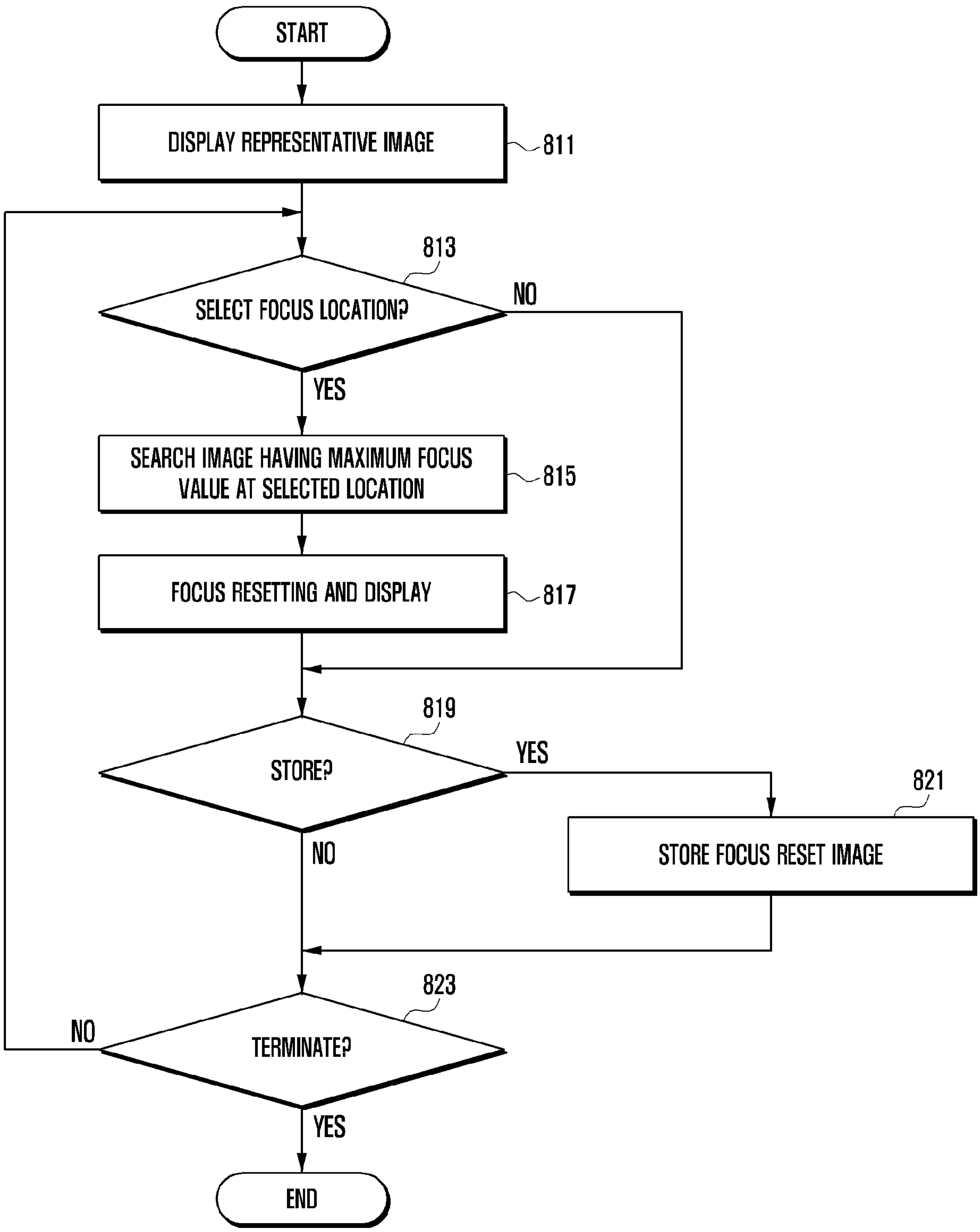
START
DISPLAY REPRESENTATIVE IMAGE
811
813
SELECT FOCUS LOCATION?
NO
YES
SEARCH IMAGE HAVING MAXIMUM FOCUS VALUE AT SELECTED LOCATION
815
FOCUS RESETTING AND DISPLAY
817
819
STORE?
YES
821
STORE FOCUS RESET IMAGE
NO
823
NO
TERMINATE?
YES
END

FIG. 9A

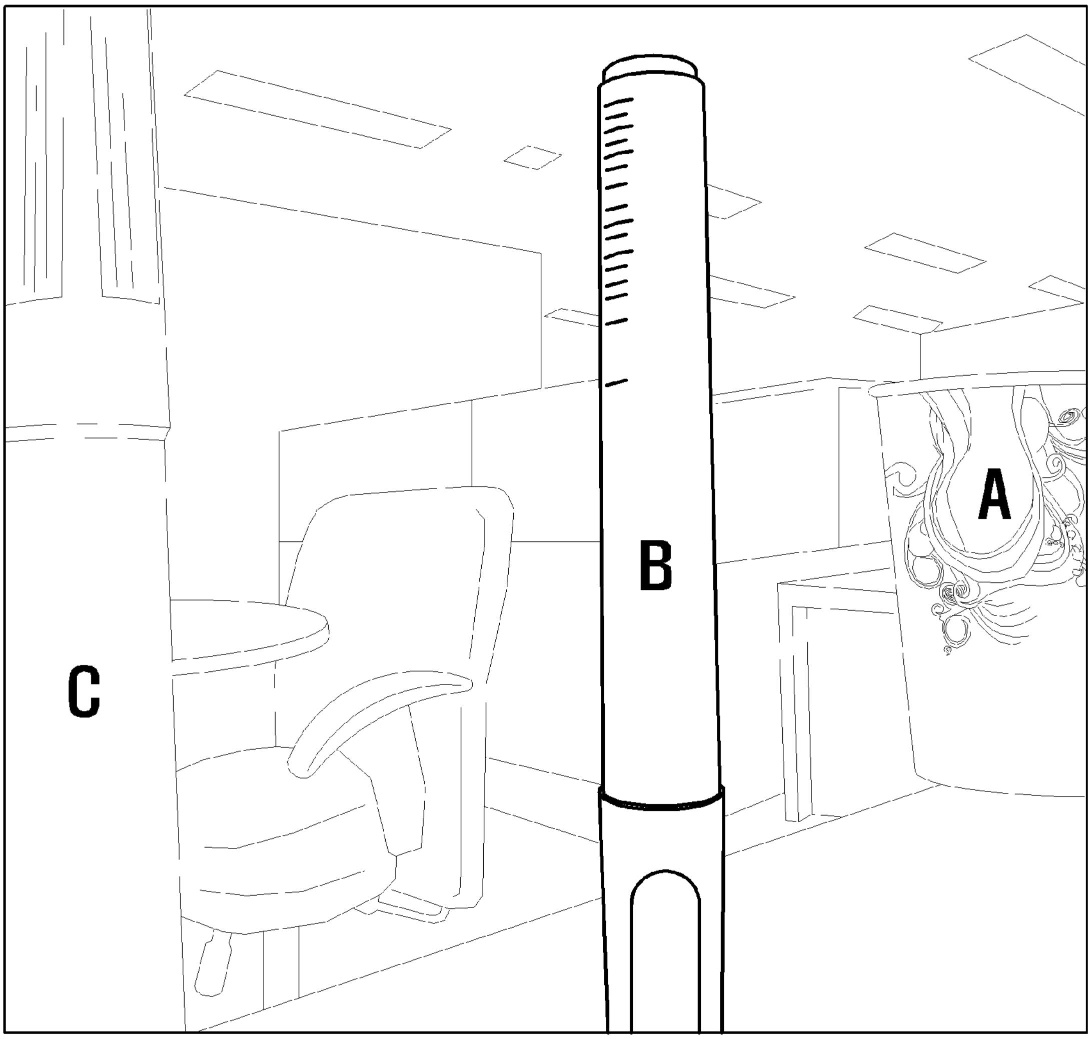

FIG. 9B

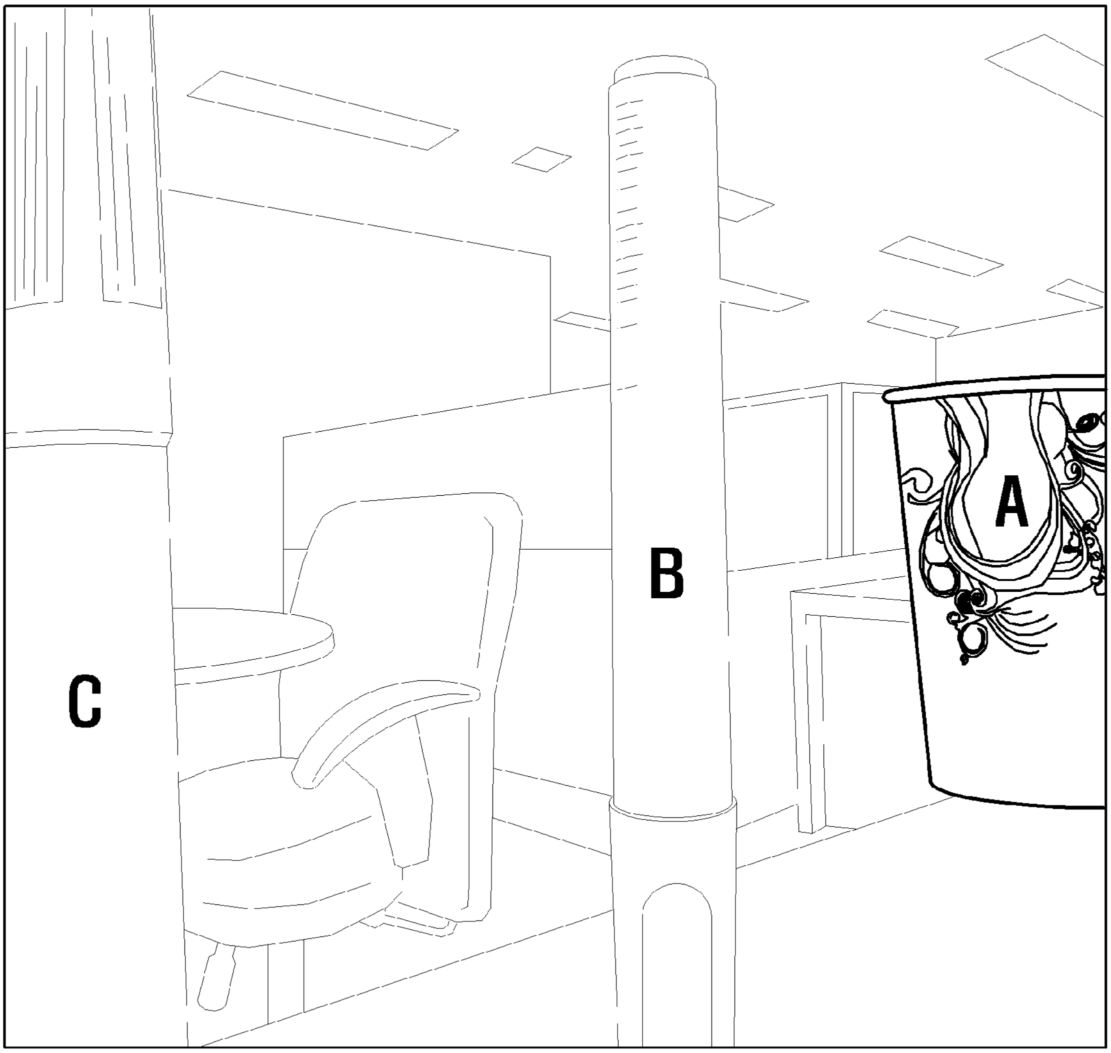


IMAGE FOCUSED AT AREA "A"

FIG. 9C

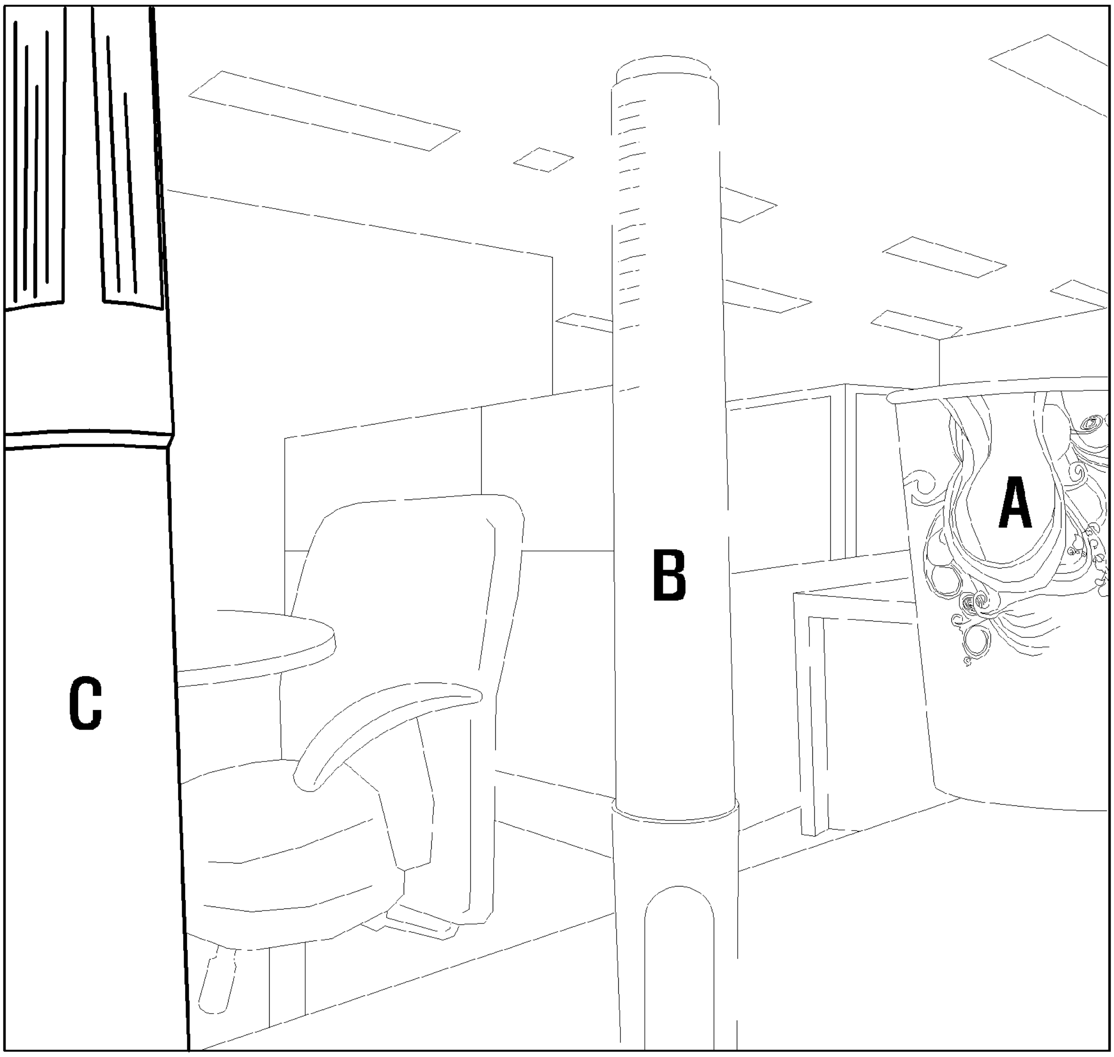


IMAGE FOCUSED AT AREA "C"

FIG. 10A

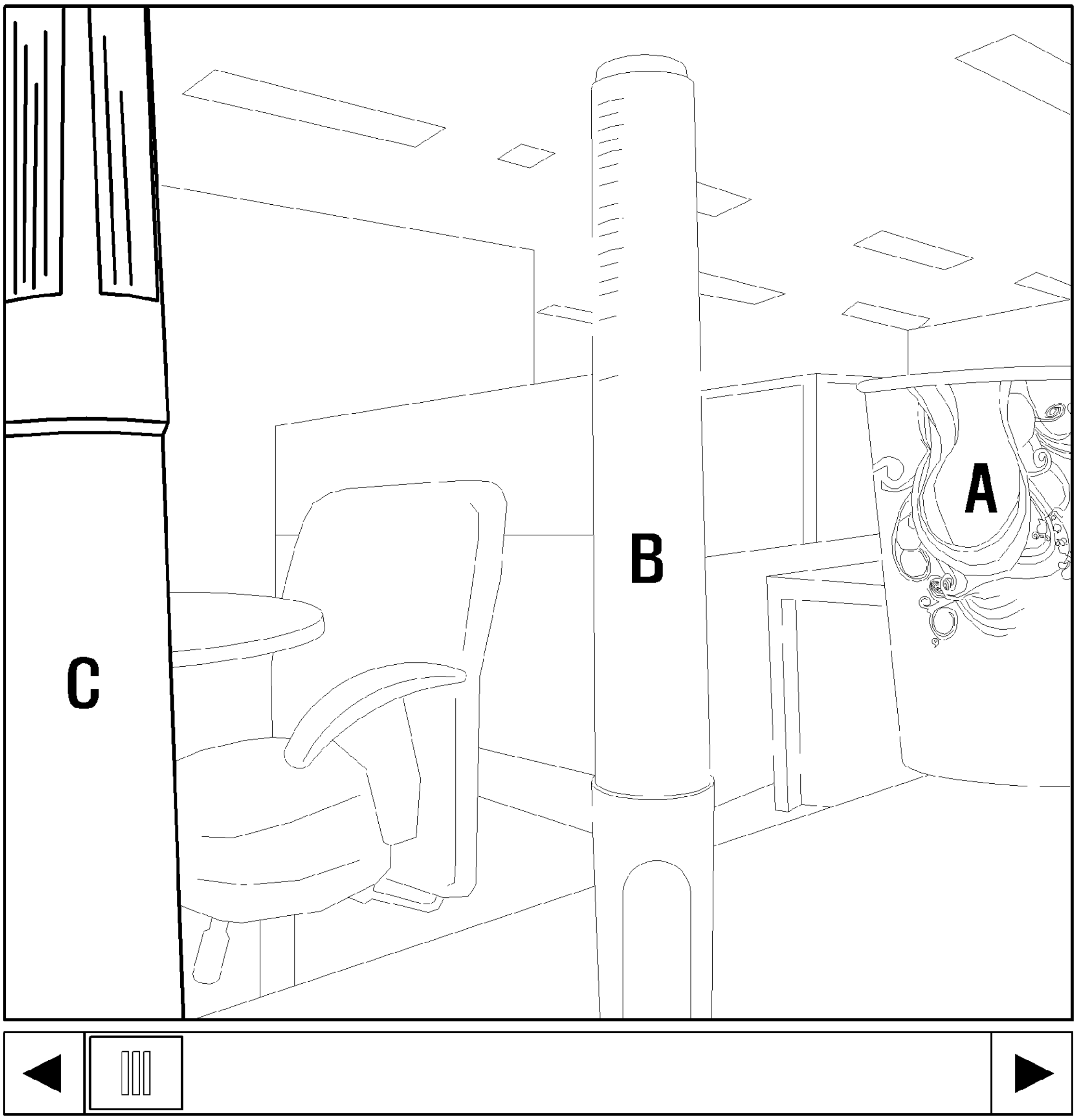

FIG. 10B

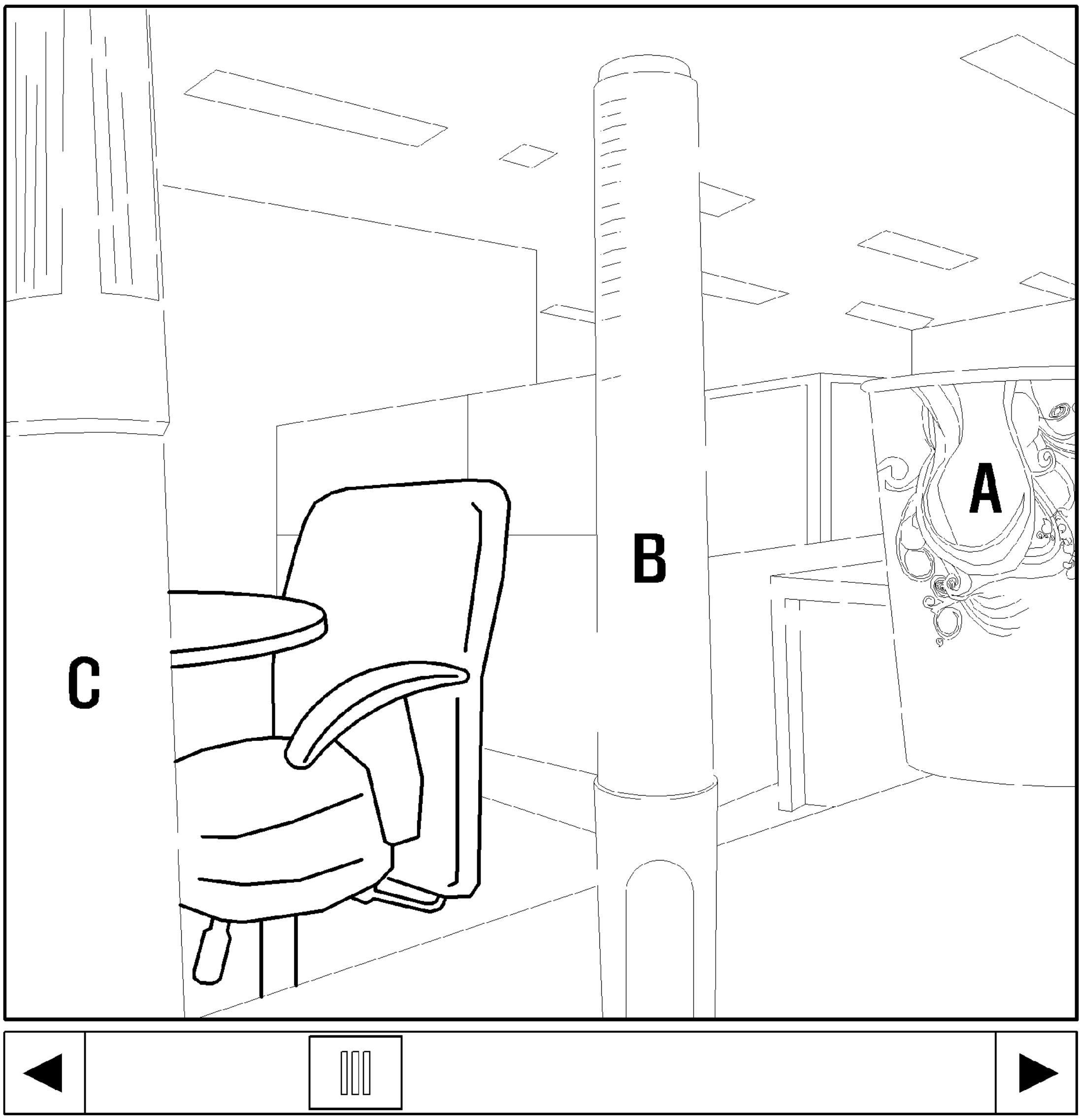

FIG. 10C

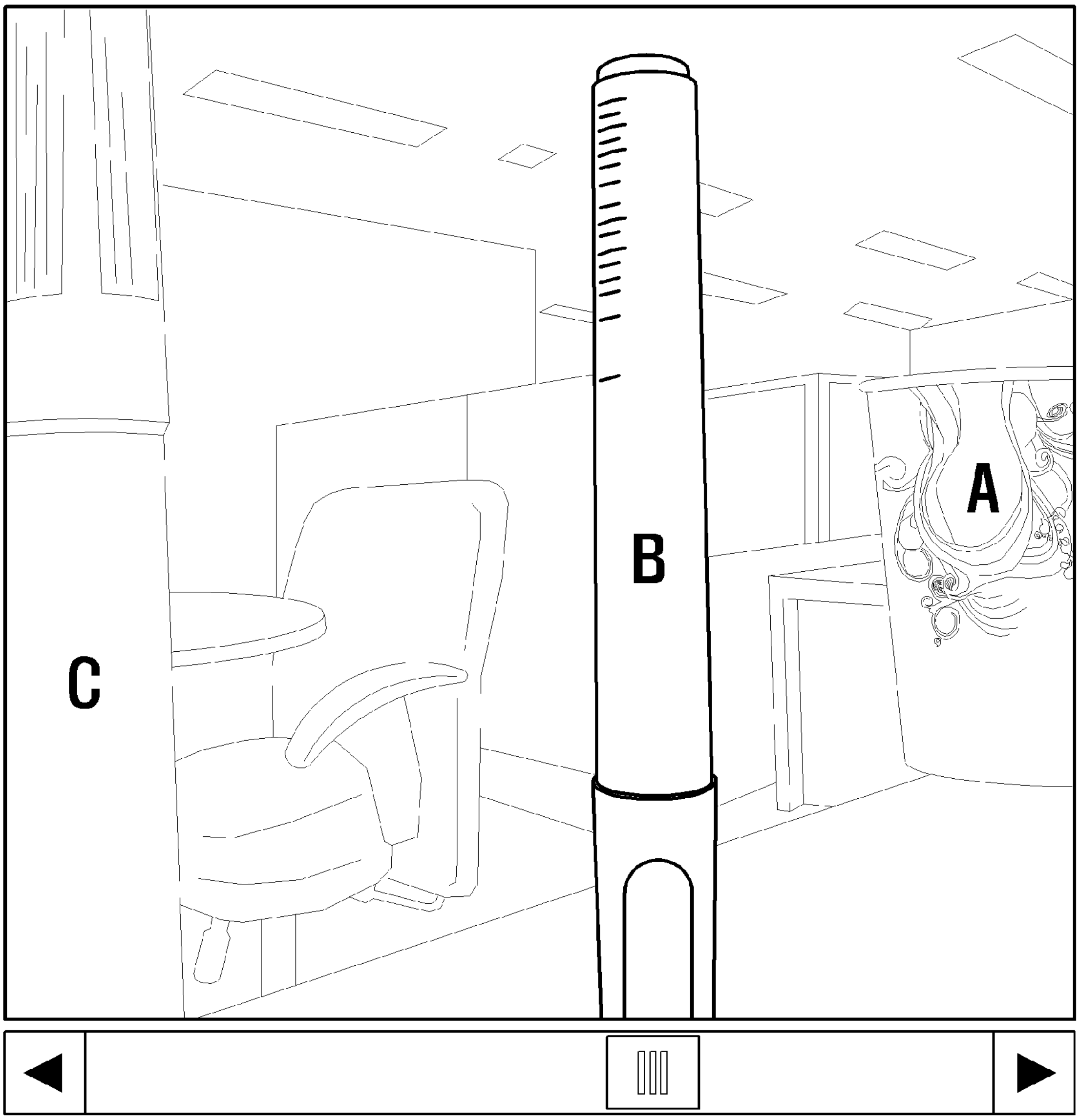

FIG. 10D

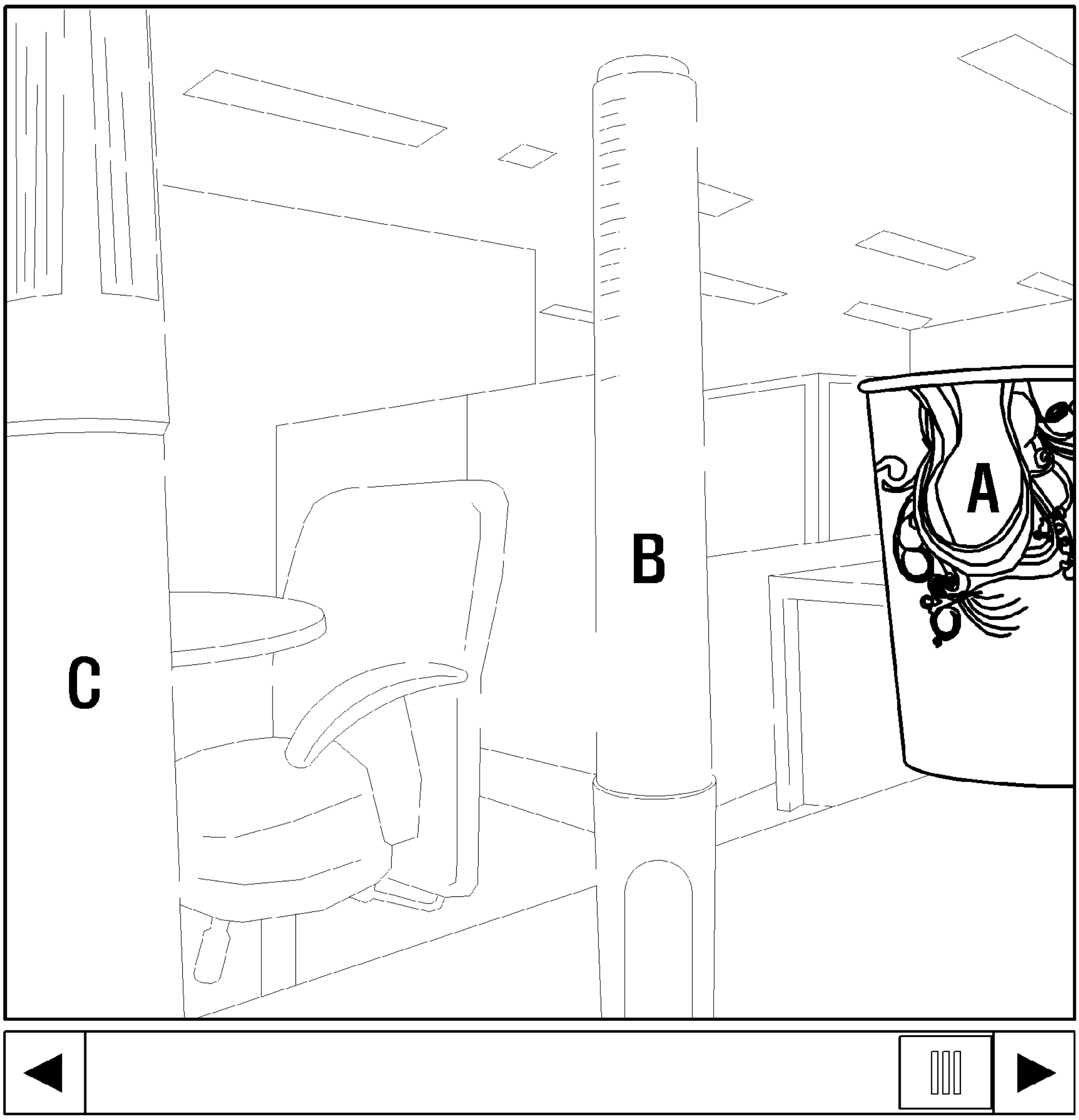

FIG. 11

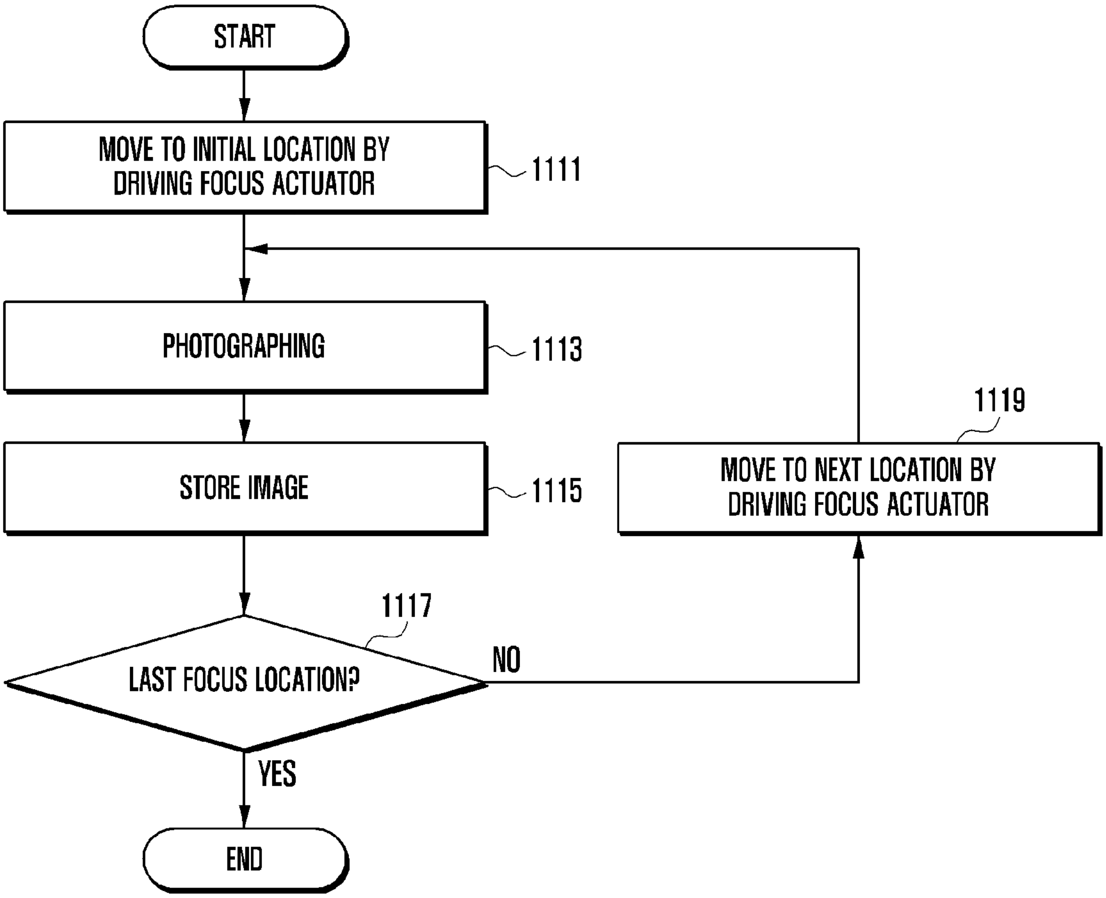
START
MOVE TO INITIAL LOCATION BY DRIVING FOCUS ACTUATOR
1111
PHOTOGRAPHING
1113
STORE IMAGE
1115
1117
LAST FOCUS LOCATION?
NO
YES
END
1119
MOVE TO NEXT LOCATION BY DRIVING FOCUS ACTUATOR

FIG. 12

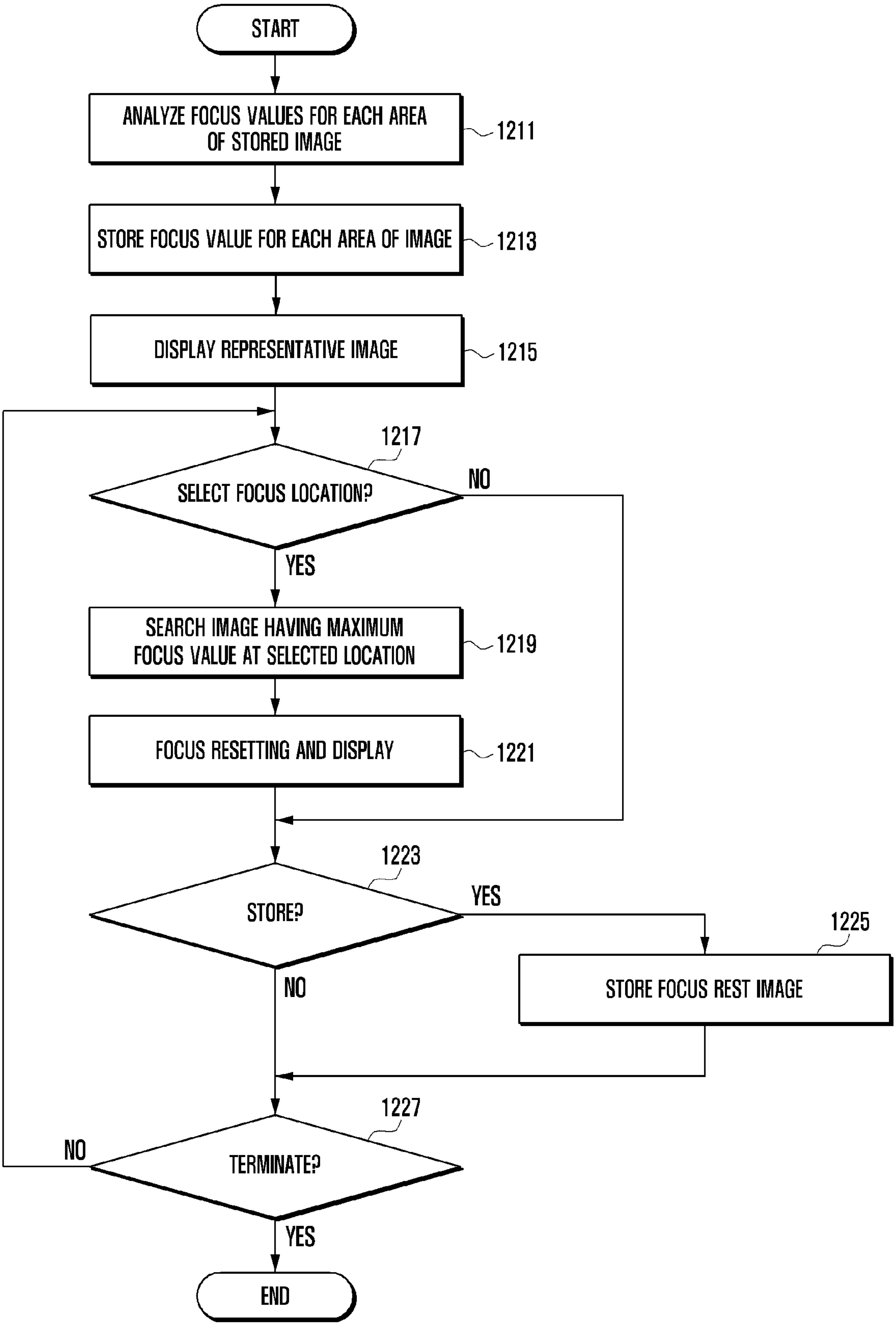
START
ANALYZE FOCUS VALUES FOR EACH AREA OF STORED IMAGE
1211
STORE FOCUS VALUE FOR EACH AREA OF IMAGE
1213
DISPLAY REPRESENTATIVE IMAGE
1215
1217
SELECT FOCUS LOCATION?
NO
YES
SEARCH IMAGE HAVING MAXIMUM FOCUS VALUE AT SELECTED LOCATION
1219
FOCUS RESETTING AND DISPLAY
1221
1223
STORE?
YES
1225
STORE FOCUS REST IMAGE
NO
1227
NO
TERMINATE?
YES
END

Europäisches Patentamt
European Patent Office
Office européen des brevets

# EUROPEAN SEARCH REPORT

Application Number
EP 13 17 4841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/070097 A1 (ADAMS JR JAMES E [US]) 22 March 2012 (2012-03-22) * abstract; figures 3, 6-8 * | 1-15 | INV. H04N5/232 |
| X | US 2012/069235 A1 (IMAI FRANCISCO [US]) 22 March 2012 (2012-03-22) * abstract; figures 2B, 3B, 4-6 * | 1-15 | |
| X | US 2008/131019 A1 (NG YI-REN [US]) 5 June 2008 (2008-06-05) * abstract; figures 1-18 * | 1-15 | |
| X | US 2010/141802 A1 (KNIGHT TIMOTHY [US] ET AL KNIGHT TIMOTHY J [US] ET AL) 10 June 2010 (2010-06-10) * paragraphs [[0101]], [[0265]] - [[0269]]; figures 5A, 5D, 10A-10C, 12 * | 1-15 | |
| X | US 2007/188652 A1 (YUYAMA MASAMI [JP]) 16 August 2007 (2007-08-16) * abstract; figures 4-6 * | 1-15 | |

TECHNICAL FIELDS SEARCHED (IPC)

H04N

The present search report has been drawn up for all claims

1

| Place of search | Date of completion of the search | Examiner |
|---|---|---|
| Munich | 24 October 2013 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 4841

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2013

| Patent document cited in search report | Publication date | Patent family member(s) | Publication date |
|---|---|---|---|
| US 2012070097 A1 | 22-03-2012 | NONE | |
| US 2012069235 A1 | 22-03-2012 | NONE | |
| US 2008131019 A1 | 05-06-2008 | NONE | |
| US 2010141802 A1 | 10-06-2010 | US 2010141802 A1 | 10-06-2010 |
| | | US 2012327222 A1 | 27-12-2012 |
| | | WO 2010077625 A1 | 08-07-2010 |
| US 2007188652 A1 | 16-08-2007 | JP 2007215091 A | 23-08-2007 |
| | | US 2007188652 A1 | 16-08-2007 |

EPO FORM P0459

For more details about this annex : see Official Journal of the European Patent Office, No. 12/82